(19) Europäisches Patentamt
European Patent Office
Office européen des brevets

(11) **EP 2 161 651 B1**

(12) **EUROPEAN PATENT SPECIFICATION**

(45) Date of publication and mention
of the grant of the patent:
**30.11.2016 Bulletin 2016/48**

(51) Int Cl.:
*G06F 3/038* (2013.01)    *G06F 3/033* (2006.01)
*G06F 3/048* (2006.01)    *G06F 3/0485* (2013.01)
*G06F 3/0484* (2013.01)

(21) Application number: **08777407.1**

(22) Date of filing: **19.06.2008**

(86) International application number:
**PCT/JP2008/061247**

(87) International publication number:
**WO 2008/156141 (24.12.2008 Gazette 2008/52)**

(54) **CONTROL DEVICE, INPUT DEVICE, CONTROL SYSTEM, HAND-HELD TYPE INFORMATION PROCESSING DEVICE, CONTROL METHOD AND ITS PROGRAM**

STEUERUNGSVORRICHTUNG, EINGABEVORRICHTUNG, STEUERUNGSSYSTEM, TRAGBARE INFORMATIONSVERARBEITUNGSVORRICHTUNG, STEUERUNGSVERFAHREN DAFÜR UND ENTSPRECHENDES PROGRAMM

DISPOSITIF, SYSTÈME ET PROCÉDÉ DE COMMANDE ET SON PROGRAMME, DISPOSITIF D'ENTRÉE ET DISPOSITIF DE TRAITEMENT D'INFORMATIONS DE TYPE PORTABLE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **20.06.2007   JP 2007162030**

(43) Date of publication of application:
**10.03.2010 Bulletin 2010/10**

(73) Proprietor: **Sony Corporation**
**Tokyo 108-0075 (JP)**

(72) Inventors:
• **YAMAMOTO, Kazuyuki**
**Tokyo 108-0075 (JP)**
• **MAMIYA, Toshio**
**Tokyo 108-0075 (JP)**
• **KABASAWA, Hidetoshi**
**Tokyo 108-0075 (JP)**
• **KUMAGAI, Hideaki**
**Tokyo 108-0075 (JP)**
• **YAMADA, Katsuhiko**
**Tokyo 108-0075 (JP)**

(74) Representative: **Müller Hoffmann & Partner Patentanwälte mbB**
**St.-Martin-Strasse 58**
**81541 München (DE)**

(56) References cited:
**JP-A- 10 111 760      JP-A- 61 240 287**
**JP-A- 2004 157 866    JP-A- 2006 236 163**
**US-A- 5 554 980        US-A1- 2004 176 140**
**US-A1- 2007 094 617**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a control apparatus for controlling a movement of a pointer on a screen, an input apparatus for outputting signals to the control apparatus, a control system, a handheld information processing apparatus, and a control method.

Background Art

Pointing devices, particularly a mouse and a touchpad, are used as controllers for GUIs (Graphical User Interfaces) widely used in PCs (Personal Computers). Not just as HIs (Human Interfaces) of PCs of the related art, the GUIs are now starting to be used as interfaces for AV equipment and game machines used in living rooms etc. with televisions as image media. Various pointing devices that a user is capable of operating 3-dimensionally are proposed as controllers for the GUIs of this type (see, for example, Patent Documents 1 and 2).

Patent Document 1: Japanese Patent Application Laid-open No. 2001-56743 (paragraphs (0030) and (0031), Fig. 3)
Patent Document 2: Japanese Patent No. 3,748,483 (paragraphs (0033) and (0041), Fig. 1)

US5554980 A describes remote control system which includes a remote control unit and a controlled unit. The remote control unit is moved in space, and includes a movement detector, selection switch and transmitter. The movement detector detects movement of the remote control unit. The transmitter transmits output of the movement detector and the selection switch. The controlled unit includes a display device, receiver, and controller. The display device includes a display screen, and displays a cursor and icons on the display screen. The receiver receives the output of the movement detector and the selection switch transmitted by the transmitter. The controller moves the cursor across the display screen in accordance with the output of the movement detector and the selection switch.

In US2004176140 (A1), a pointing device that can be operated to move an operational object on a display screen in any direction comprises a control unit for changing an operation mode of the pointing device according to contents displayed on the display screen. Further, a mobile telephone comprises such a pointing device,

US20070094617 (A1) describes a method for controlling a cursor in a graphical user interface. A direction signal is received from a cursor control device. Thereafter, a current mode is determined for said electronic apparatus in response to an actuation of an element of said GUI. After that, said direction signal is related to a set of predetermined directions, wherein said set of predetermined directions depends on said current mode. Next, said direction signal is classified into one direction of said set of predetermined directions, and, thereafter, said cursor is moved according to said one direction.

Disclosure of the Invention

Problem to be solved by the Invention

Incidentally, GUIs including icons displayed on a screen of AV equipment and the like used in living rooms etc. are generally operated by using pointing devices such as arrow keys and joysticks. Therefore, the GUIs including icons are generally displayed in a 1-dimensional single-row or single-column region on the screen so as to facilitate operations using the arrow keys and joysticks. However, there is a problem of poor operability in a case where a user tries to operate the GUIs displayed in the vertical or lateral 1-dimensional region on the screen by using the pointing device for 3-dimensional operations. Specifically, it has been necessary for the user to operate the pointer by moving the pointing device for 3-dimensional operations in an almost-horizontal or -vertical direction for operating or selecting the GUI on the screen. In a case where such operations fail to be made, the pointer slides out of the 1-dimensional region. As described above, the operability is poor since it is difficult for the user to move the pointing device for 3-dimensional operations only in the 1-dimensional direction in the air, which is problematic.

Moreover, the GUIs that have been developed for PCs are expected to be displayed by AV equipment and the like used in living rooms etc. in general from now on. Therefore, it is expected that a system that facilitates operations in a predetermined region on a screen displaying the GUIs will be desired in the future since it is also expected that the user will operate the GUIs for a PC using the pointing device for 3-dimensional operations.

In view of the above-mentioned circumstances, it is an object of the present invention to provide a control apparatus, an input apparatus, a control system, a handheld information processing apparatus, a control method, and a program therefor that are capable of improving operability when a user operates a GUI displayed on a screen by a pointer using the input apparatus.

Means for solving the Problem

The above problems are solved by the claimed matter according to the independent claims. There is provided a control apparatus controlling a movement of a pointer displayed on a screen that includes a plurality of regions in accordance with detection signals output from an input apparatus including a casing, a detection means for detecting a movement in a first direction of the casing and a movement in a second direction different from the first direction, and an output means for outputting the detection signals obtained by the detection means, the control apparatus including: a reception means for receiving the detection signals; a calculation means for calculating, based on detection values of the received detection signals, a first corresponding displacement amount corresponding to the detection value in the first direction and a second corresponding displacement amount corresponding to the detection value in the second direction, for moving the pointer on the screen; and a display control means for controlling display of the screen so that the pointer moves by a first displacement amount obtained by multiplying the first corresponding displacement amount by a first value according to each of the plurality of regions on the screen, and the pointer moves by a second displacement amount obtained by multiplying the second corresponding displacement amount by a second value according to each of the plurality of regions on the screen.

Accordingly, a moving direction of the pointer on the screen can be biased for each of the regions sectioning the screen. Therefore, operability of the pointer using the input apparatus is improved.

In the present invention, the preamble part "a control apparatus...a casing..." is presented for the purpose of clarifying the content of the present invention and is not intended as a well-known technique by the inventors of the present invention. The same holds true for descriptions below.

In the control apparatus, the display control means may set the first value based on the first corresponding displacement amount and the second value based on the second corresponding displacement amount.

Accordingly, displacement amounts of the pointer on the screen can be made to depend not only on the regions on the screen but also on the corresponding displacement amounts. Therefore, a degree of freedom in moving the pointer in each of the regions on the screen is enhanced.

In the control apparatus, the first value may be larger than the second value when one of the plurality of regions is elongated in the first direction of the screen.

Accordingly, for example, in a case where GUIs including icons and scrollbars operated by using a pointer is displayed 1-dimensionally on the screen, it is possible to prioritize the movement of the pointer in the 1-dimensional direction. In other words, it becomes difficult for the pointer to slide out of the 1-dimensional region, resulting in an improvement in operability of the pointer using the input apparatus.

Because it is difficult to operate the pointing device only in the 1-dimensional direction in the air when using the pointing device for 3-dimensional operations as the input apparatus, operability of the pointer is particularly improved.

In the control apparatus, the display control means may set the first value to be larger than the second value when the first corresponding displacement amount is larger than the second corresponding displacement amount, and set the second value to be larger than the first value when the second corresponding displacement amount is larger than the first corresponding displacement amount.

Accordingly, the movement direction of the pointer on the screen can be biased to the first direction and the second direction. When the first direction is a vertical direction on the screen and the second direction is a horizontal direction on the screen, for example, the movement of the pointer is biased to the vertical and horizontal directions on the screen. Thus, for example, when the 1-dimensional region is constituted by arranging the GUIs including icons and scrollbars operated by using the pointer in the vertical direction on the screen, it is possible to cause the pointer to take a biased movement in the vertical and horizontal directions. If a user is to select an icon or operate the scrollbar, by merely operating the input apparatus in near-vertical directions, it becomes difficult for the pointer to slide out of that region. On the other hand, by the user operating the input apparatus in near-horizontal directions, the pointer is allowed to slide out of that region.

There is further provided a control apparatus controlling a movement of a pointer displayed on a screen that includes a plurality of regions in accordance with information on a first corresponding displacement amount and information on a second corresponding displacement amount output from an input apparatus including a casing, a detection means for detecting a movement in a first direction of the casing and a movement in a second direction different from the first direction, and a calculation means for calculating, based on detection values obtained by the detection means, the first corresponding displacement amount corresponding to the detection value in the first direction and a second corresponding displacement amount corresponding to the detection value in the second direction, for moving the pointer on the screen, the control apparatus characterized by including: a reception means for receiving the information on the first corresponding displacement amount and the information on the second corresponding displacement amount; and a display control means for controlling display of the screen so that the pointer moves by a first displacement amount obtained by multiplying the first corresponding displacement amount by a first value according to each of the plurality of regions on the screen, and the pointer moves by a second displacement amount obtained by multiplying the second corresponding displacement amount by a second value according to each of the plurality of regions on the screen.

In the control apparatus, the display control means may set the first value based on the first corresponding displacement amount and the second value based on the second corresponding displacement amount.

In the control apparatus, the first value may be larger than the second value when one of the plurality of regions is elongated in the first direction of the screen.

In the control apparatus, the display control means may set the first value to be larger than the second value when the first corresponding displacement amount is larger than the second corresponding displacement amount, and set the second value to be larger than the first value when the second corresponding displacement amount is larger than the first corresponding displacement amount.

There is further provided an input apparatus outputting, to a control apparatus controlling display of a movement of a pointer on a screen that includes a plurality of regions and transmitting regional information of the plurality of regions on the screen, a signal of displacement amount information for moving the pointer on the screen, the input apparatus characterized by including: a casing; a detection means for detecting a movement in a first direction of the casing and a movement in a second direction different from the first direction; a reception means for receiving the regional information; a calculation means for calculating, based on detection values obtained by the detection means, a first corresponding displacement amount corresponding to the detection value in the first direction and a second corresponding displacement amount corresponding to the detection value in the second direction, for moving the pointer on the screen, and calculating, based on the regional information, a first displacement amount obtained by multiplying the first corresponding displacement amount by a first value and a second displacement amount obtained by multiplying the second corresponding displacement amount by a second value; and an output means for outputting the first displacement amount and the second displacement amount as the signal of the displacement amount information.

In the input apparatus, the calculation means may set the first value based on the first corresponding displacement amount and the second value based on the second corresponding displacement amount.

In the input apparatus, the first value may be larger than the second value when one of the plurality of regions is elongated in the first direction of the screen.

In the input apparatus, the calculation means may set the first value to be larger than the second value when the first corresponding displacement amount is larger than the second corresponding displacement amount, and set the second value to be larger than the first value when the second corresponding displacement amount is larger than the first corresponding displacement amount.

There is further provided a control system characterized by including: an input apparatus to output detection signals, including a casing, a detection means for detecting a movement in a first direction of the casing and a movement in a second direction different from the first direction, and an output means for outputting the detection signals obtained by the detection means; and a control apparatus to control a movement of a pointer displayed on a screen that includes a plurality of regions in accordance with the detection signals output from the input apparatus, including a reception means for receiving the detection signals, a calculation means for calculating, based on detection values of the received detection signals, a first corresponding displacement amount corresponding to the detection value in the first direction and a second corresponding displacement amount corresponding to the detection value in the second direction, for moving the pointer on the screen, and a display control means for controlling display of the screen so that the pointer moves by a first displacement amount obtained by multiplying the first corresponding displacement amount by a first value according to each of the plurality of regions on the screen, and the pointer moves by a second displacement amount obtained by multiplying the second corresponding displacement amount by a second value according to each of the plurality of regions on the screen.

There is further provided a control system characterized by including: an input apparatus to output information on corresponding displacement amounts, including a casing, a detection means for detecting a movement in a first direction of the casing and a movement in a second direction different from the first direction, a calculation means for calculating, based on detection values obtained by the detection means, a first corresponding displacement amount corresponding to the detection value in the first direction and a second corresponding displacement amount corresponding to the detection value in the second direction, for moving a pointer on a screen, and an output means for outputting the information on the first corresponding displacement amount and the information on the second corresponding displacement amount; and a control apparatus to control a movement of the pointer displayed on the screen that includes a plurality of regions in accordance with the information on the first corresponding displacement amount and the information on the second corresponding displacement amount output from the input apparatus, including a reception means for receiving the information on the first corresponding displacement amount and the information on the second corresponding displacement amount, and a display control means for controlling display of the screen so that the pointer moves by a first displacement amount obtained by multiplying the first corresponding displacement amount by a first value according to each of the plurality of regions on the screen, and the pointer moves by a second displacement amount obtained by multiplying the second corresponding displacement amount by a second value according to each of the plurality of regions on the screen.

There is further provided a control system characterized by including: a control apparatus to control display of a movement of a pointer on a screen that includes a plurality of regions, including a control means for controlling the movement of the pointer, and a transmission means for transmitting regional information of the plurality of regions on the screen; and an input apparatus to output a signal of displacement amount information for moving the pointer on the screen to the control apparatus, including a casing, a detection means for detecting a movement in a first direction of the casing and a movement in a second direction different from the first direction, a reception means for receiving the regional information, a calculation means for calculating, based on detection values obtained by the detection means, a first corresponding displacement amount corresponding to the detection value in the first direction and a second corresponding displacement amount corresponding to the detection value in the second direction, for moving the pointer on the screen, and calculating, based on the regional information, a first displacement amount obtained by multiplying the first corresponding displacement amount by a first value and a second displacement amount obtained by multiplying the second corresponding displacement amount by a second value, and an output means for outputting the first displacement amount and the second displacement amount as the signal of the displacement amount information.

There is further provided a method of controlling a movement of a pointer displayed on a screen that includes a plurality of regions in accordance with a movement of an input apparatus, characterized by including: detecting a movement of the input apparatus in a first direction of a casing and a movement thereof in a second direction different from the first direction; calculating, based on detection values detected, a first corresponding displacement amount corresponding to the detection value in the first direction and a second corresponding displacement amount corresponding to the detection value in the second direction, for moving the pointer on the screen; and controlling display of the screen so that the pointer moves by a first displacement amount obtained by multiplying the first corresponding displacement amount by a first value according to each of the plurality of regions on the screen, and the pointer moves by a second displacement amount obtained by multiplying the second corresponding displacement amount by a second value according to each of the plurality of regions on the screen.

There is further provided a handheld information processing apparatus controlling a movement of a pointer on a screen that includes a plurality of regions, characterized by including: a display means for displaying the screen; a casing; a detection means for detecting a movement in a first direction of the casing and a movement in a second direction different from the first direction; a calculation means for calculating, based on detection values obtained by the detection means, a first corresponding displacement amount corresponding to the detection value in the first direction and a second corresponding displacement amount corresponding to the detection value in the second direction, for moving the pointer on the screen; and a display control means for controlling display of the screen so that the pointer moves by a first displacement amount obtained by multiplying the first corresponding displacement amount by a first value according to each of the plurality of regions on the screen, and the pointer moves by a second displacement amount obtained by multiplying the second corresponding displacement amount by a second value according to each of the plurality of regions on the screen.

In the handheld information processing apparatus, the display control means may set the first value based on the first corresponding displacement amount and the second value based on the second corresponding displacement amount.

In the handheld information processing apparatus, the first value may be larger than the second value when one of the plurality of regions is elongated in the first direction of the screen.

In the handheld information processing apparatus, the display control means may set the first value to be larger than the second value when the first corresponding displacement amount is larger than the second corresponding displacement amount, and set the second value to be larger than the first value when the second corresponding displacement amount is larger than the first corresponding displacement amount.

Effect of the Invention

As described above, according to the present invention, it is possible to provide a control apparatus, an input apparatus, a control system, a handheld information processing apparatus, a control method, and a program therefor that are capable of improving operability when a user operates a GUI displayed on a screen by a pointer using the input apparatus.

Best Modes for Carrying Out the Invention

Hereinafter, embodiments of the present invention will be described with reference to the drawings.

Fig. 1 is a diagram showing a control system according to an embodiment of the present invention. A control system 100 includes a display apparatus 5, a control apparatus 40, and an input apparatus 1.

Fig. 2 is a perspective diagram showing the input apparatus 1.

As will be described later, the input apparatus 1 of this embodiment is described as a pointing device that operates by two angular velocity sensors and two acceleration sensors.

The input apparatus 1 is of a size that a user is capable of holding. The input apparatus 1 includes a casing 10 and operation sections such as two buttons 11 and 12 provided at an upper portion of the casing 10 and a rotary wheel button 13. The button 11 disposed closer to the center of the upper portion of the casing 10 functions as a left button of a mouse as an input device for a PC, and the button 12 adjacent to the button 11 functions as a right button of the mouse, for example.

For example, a "drag and drop" operation may be executed by moving the input apparatus 1 while pressing the button 11, a file may be opened by double-clicking the button 11, and a screen 3 may be scrolled with the wheel button 13. Locations of the buttons 11 and 12 and the wheel button 13, a content of a command issued, and the like can arbitrarily be changed.

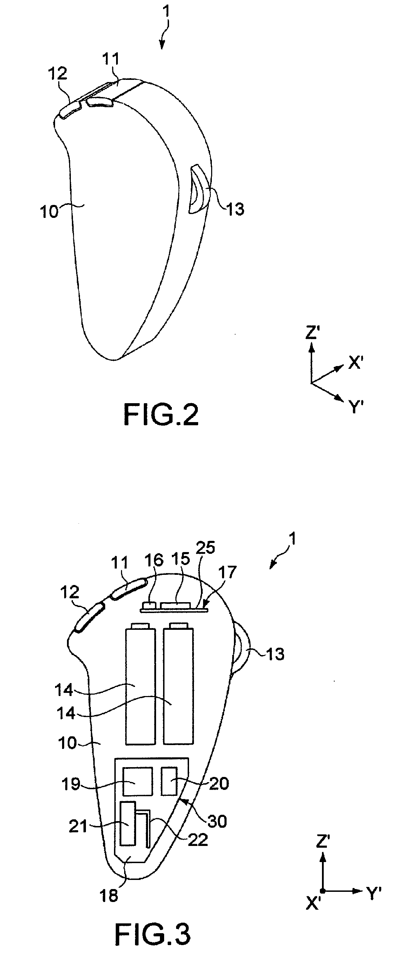

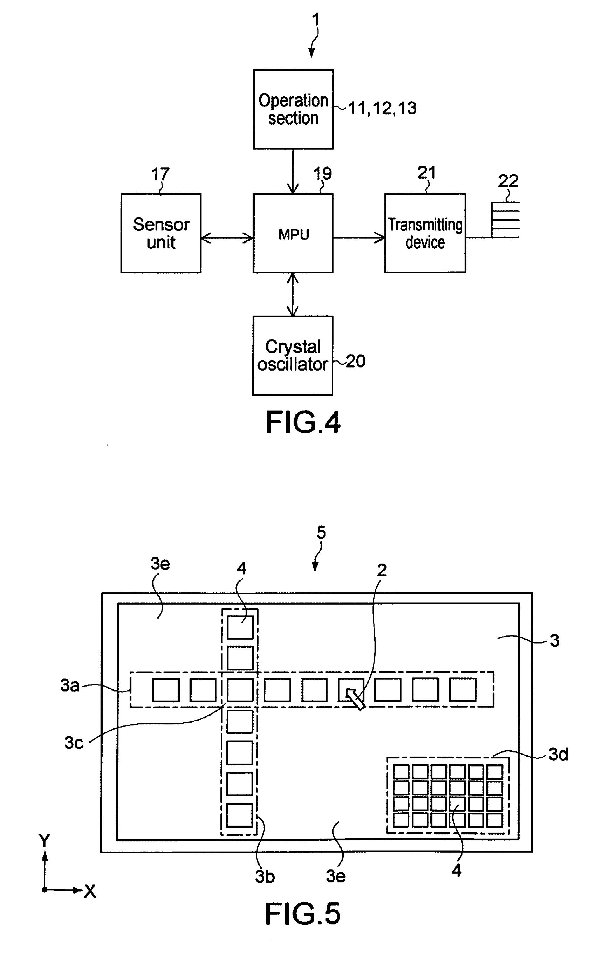

Fig. 3 is a diagram schematically showing an inner structure of the input apparatus 1. Fig. 4 is a block diagram showing an electrical structure of the input apparatus 1.

The input apparatus 1 includes a sensor unit 17, a control unit 30, and batteries 14.

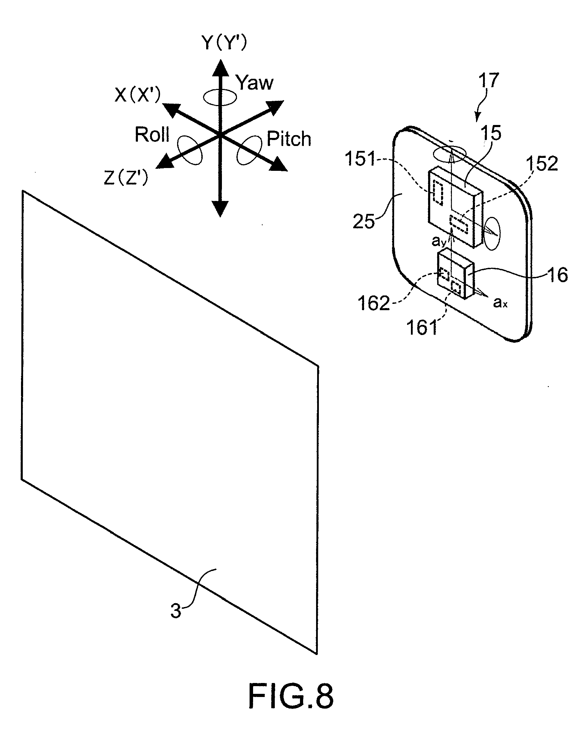

Fig. 8 is a perspective diagram showing the sensor unit 17. The sensor unit 17 includes an acceleration sensor unit 16 for detecting accelerations in different angles such as along two orthogonal axes (X' axis and Y' axis). Specifically, the acceleration sensor unit 16 includes two sensors, that is, a first acceleration sensor 161 and a second acceleration sensor 162. The sensor unit 17 further includes an angular velocity sensor unit 15 for detecting angular accelerations about the two orthogonal axes. Specifically, the angular velocity sensor unit 15 includes two sensors, that is, a first angular velocity sensor 151 and a second angular velocity sensor 152. The acceleration sensor unit 16 and the angular velocity sensor unit 15 are packaged and mounted on a circuit board 25.

As each of the first angular velocity sensor 151 and the second angular velocity sensor 152, a vibration gyro sensor for detecting Coriolis force in proportion with an angular velocity is used. As each of the first acceleration sensor 161 and the second acceleration sensor 162, any sensor such as a piezoresistive sensor, a piezoelectric sensor, or a capacitance sensor may be used.

In description given with reference to Figs. 2 and 3, a longitudinal direction of the casing 10 is referred to as Z' direction, a thickness direction of the casing 10 is referred to as X' direction, and a width direction of the casing 10 is referred to as Y' direction for convenience. In this case, the sensor unit 17 is incorporated into the casing 10 such that a surface of the circuit board 25 on which the acceleration sensor unit 16 and the angular velocity sensor unit 15 are mounted is substantially in parallel with an X'-Y' plane. As described above, the sensor units 16 and 15 each detect physical amounts with respect to the two axes, that is, the X' axis and the Y' axis. In descriptions below, a coordinate system that moves along with the input apparatus 1, that is, a coordinate system fixed to the input apparatus 1 is expressed using the X' axis, Y' axis, and Z' axis, whereas a coordinate system stationary on earth, that is, an inertial coordinate system is expressed using the X axis, Y axis, and Z axis. In addition, in descriptions below, with regard to the movement of the input apparatus 1, a rotational direction about the X' axis is sometimes referred to as pitch direction, a rotational direction about the Y' axis is sometimes referred to as yaw direction, and a rotational direction about the Z' axis is sometimes referred to as roll direction.

The control unit 30 includes a main substrate 18, an MPU (Micro Processing Unit) (or CPU) 19 mounted on the main substrate 18, a crystal oscillator 20, a transmitting device 21, and an antenna 22 printed on the main substrate 18.

The MPU 19 includes a built-in volatile or nonvolatile memory requisite therefor. The MPU 19 is input with a detection signal from the sensor unit 17, an operation signal from the operation section, and the like, and executes various calculations in order to generate predetermined control signals in response to those input signals.

The transmitting device 21 transmits control signals (input information) generated in the MPU 19 as RF radio signals to the control apparatus 40 via the antenna 22.

The crystal oscillator 20 generates clocks and supplies the clocks to the MPU 19. As the batteries 14, dry cell batteries or rechargeable batteries are used.

The control apparatus 40 is a computer and includes an MPU 35 (or CPU), a RAM 36, a ROM 37, a video RAM 41, a display control section 42, an antenna 39, and a receiver device 38.

The receiver device 38 receives the control signal transmitted from the input apparatus 1 via the antenna 39. The MPU 35 analyzes the control signal and executes various calculations. As a result, a display control signal for controlling a UI displayed on the screen 3 of the display apparatus 5 is generated. The analysis of the control signal and the various calculations will be described later.

A display control section 42 mainly generates screen data to be displayed on the screen 3 of the display apparatus 5 in accordance with the control of the MPU 35. The video RAM 41 serves as a work region of the display control section 42 and temporarily stores the generated screen data.

The ROM 37 stores, in addition to a control program for the MPU 35 to control each component and various types of initial data, a program for the MPU 35 to section and recognize the screen 3.

The control apparatus 40 may be an apparatus dedicated to the input apparatus 1, or may be a PC or the like. The control apparatus 40 is not limited to the PC, and may be a computer integrally formed with the display apparatus 5, audiovisual equipment, a projector, a game device, a car

Examples of the display apparatus 5 include a liquid crystal display and an EL (Electro-Luminescence) display, but are not limited thereto. The display apparatus 5 may alternatively be an apparatus integrally formed with a display and capable of receiving television broadcasts and the like.

Fig. 5 is a diagram showing an example of the screen 3 displayed on the display apparatus 5. A pointer 2 and a plurality of icons 4 are displayed on the screen 3. The screen 3 is sectioned into a plurality of regions in relation to the arrangement of the icons 4. For example, the screen 3 is sectioned to a region 3a in which the plurality of icons 4 are arranged 1-dimensionally in the X direction and a region 3b in which the plurality of icons 4 are arranged 1-dimensionally in the Y direction. Further, the screen 3 is also sectioned to a region 3c at which the 1-dimensional region 3a in the X direction and the 1-dimensional region 3b in the Y direction intersect, a region 3d in which the icons 4 are arranged regularly in the X and Y directions, and a region 3e as a region other than those described above.

It should be noted that the icons are obtained by imaging program functions, execution commands, file contents, and the like of a computer on the screen 3. Further, the horizontal direction of the screen 3 is set as the X-axis direction and the vertical direction thereof is set as the Y-axis direction.

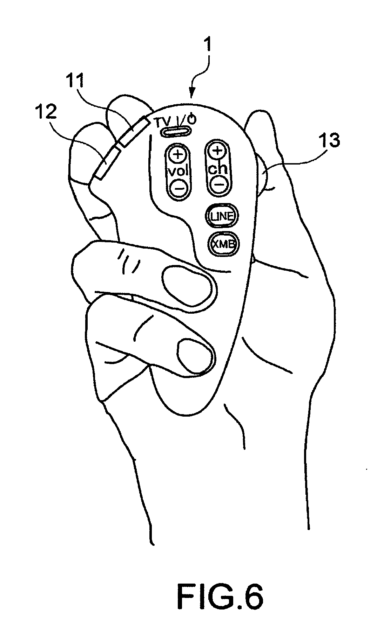

Fig. 6 is a diagram showing a state where a user is holding the input apparatus 1. As shown in Fig. 6, the input apparatus 1 may include, in addition to the buttons 11, 12, and 13, operation sections including various operation buttons such as those provided to a remote controller for operating a television or the like and a power switch, for example. When the user moves the input apparatus 1 in the air or operates the operation sections while holding the input apparatus 1 as shown in the figure, input information is output to the control apparatus 40, which then controls the operation of the pointer 2 on the screen 3.

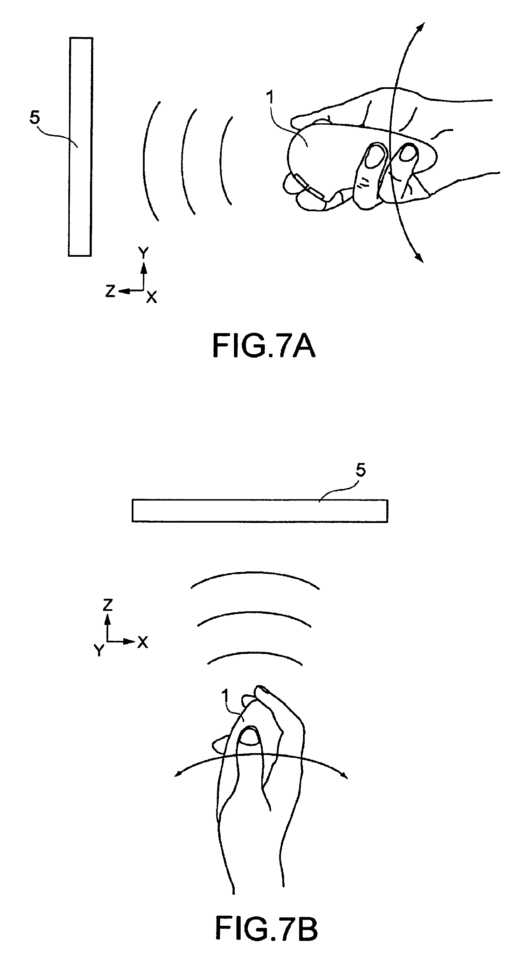

Next, a description will be given on typical examples of ways of moving the input apparatus 1. Figs. 7 are explanatory diagrams therefor.

As shown in Figs. 7A and 7B, the user holds the input apparatus 1 so as to aim the buttons 11 and 12 side of the input apparatus 1 at the display apparatus 5 side. The user holds the input apparatus 1 so that a thumb is located on an upper side and a pinky is located on a lower side as in handshakes. In this state, the circuit board 25 (see Fig. 8) of the sensor unit 17 is substantially in parallel with the screen of the display apparatus 5, and the two axes as detection axes of the sensor unit 17 respectively correspond to the horizontal axis (X axis) and the vertical axis (Y axis) on the screen 3. Hereinafter, the position of the input apparatus 1 as shown in Figs. 7A and 7B is referred to as reference position.

As shown in Fig. 7A, when the user swings a wrist or an arm in the vertical direction, that is, the pitch direction while the input apparatus 1 is in the reference position, the second acceleration sensor 162 detects an acceleration in the Y'-axis direction (second acceleration $a_y$) and the first angular velocity sensor 151 detects an angular velocity about the X' axis (first angular velocity).

Meanwhile, as shown in Fig. 7B, when the user swings the wrist or the arm in the horizontal direction, that is, the yaw direction while the input apparatus 1 is in the reference position, the first acceleration sensor 161 detects an acceleration in the X'-axis direction (first acceleration $a_x$) and the second angular velocity sensor 152 detects an angular velocity about the Y' axis (second angular velocity).

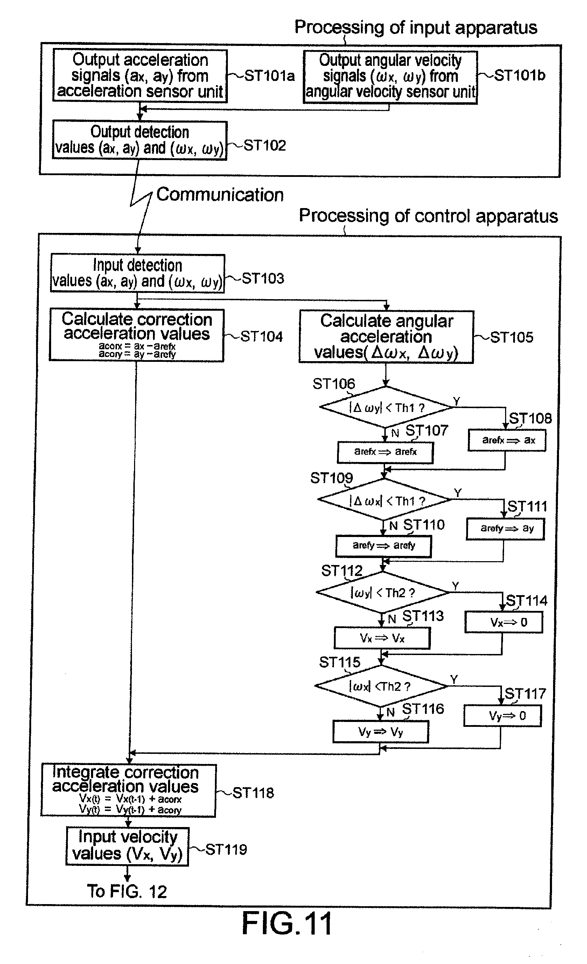

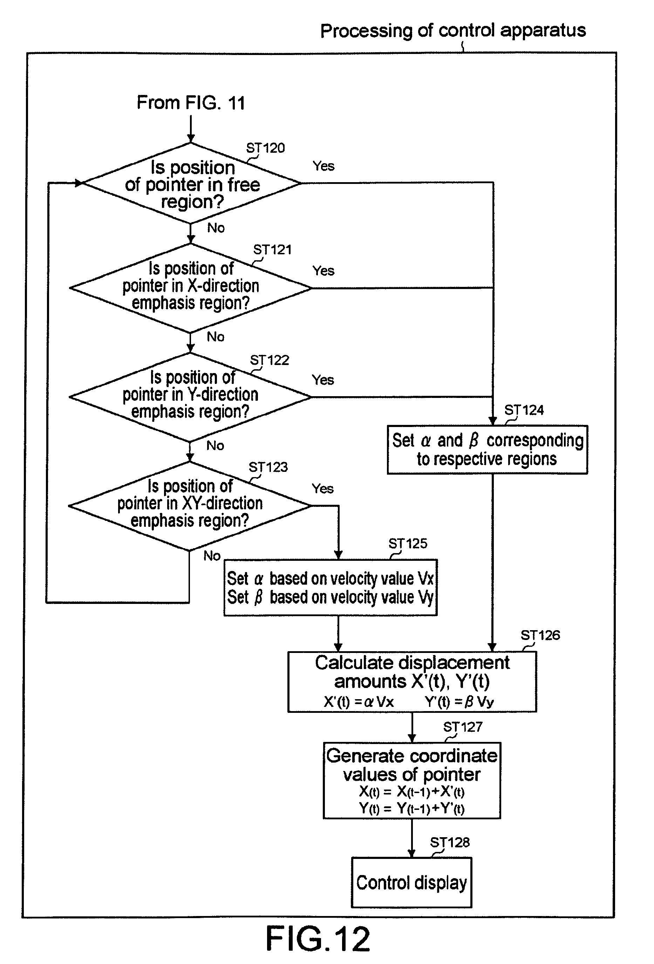

Although descriptions will be given later, in the embodiment, the physical amounts detected by the sensor unit 17 in the input apparatus 1 are transmitted to the control apparatus 40 as input information. In this case, the MPU 35 of the control apparatus 40 first calculates the velocity values (corresponding displacement amounts) based on the received input information in accordance with the program stored in the ROM 37. Typically, regarding the velocity value, the MPU 35 of the control apparatus 40 adds an n-th velocity value that has been input to a (n-1)-th velocity value that has been input. Accordingly, the n-th velocity value that has been input corresponds to a corresponding displacement amount of the pointer 2. A calculation method regarding an integral of the displacement amounts. Next, the MPU 35 calculates displacement amounts of the pointer 2 on the screen 3 by multiplying the velocity values (corresponding displacement amounts) by predetermined values corresponding to the respective regions on the screen 3, and controls display so as to move the pointer 2 (see Figs. 11 and 12).

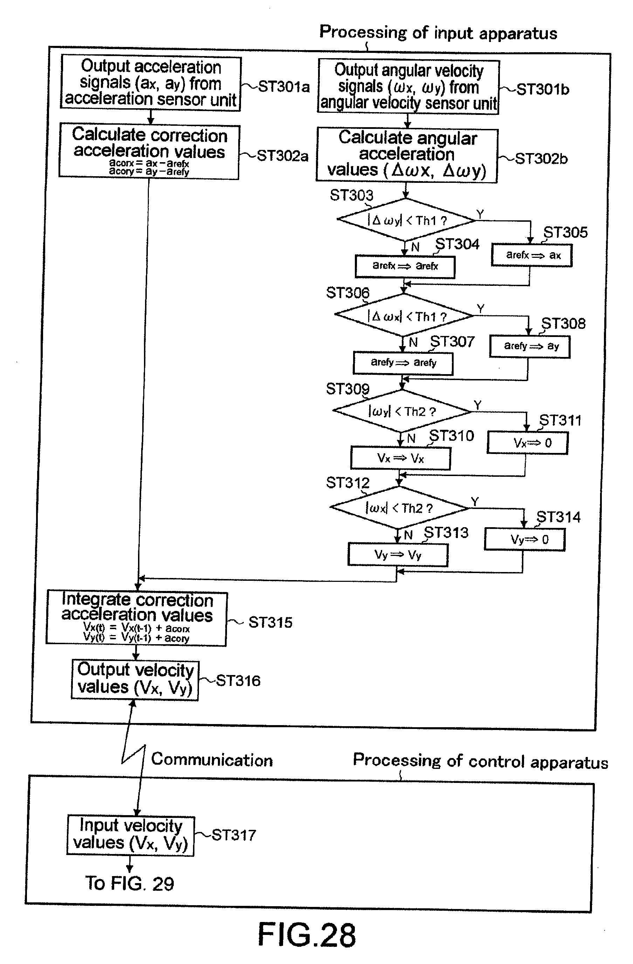

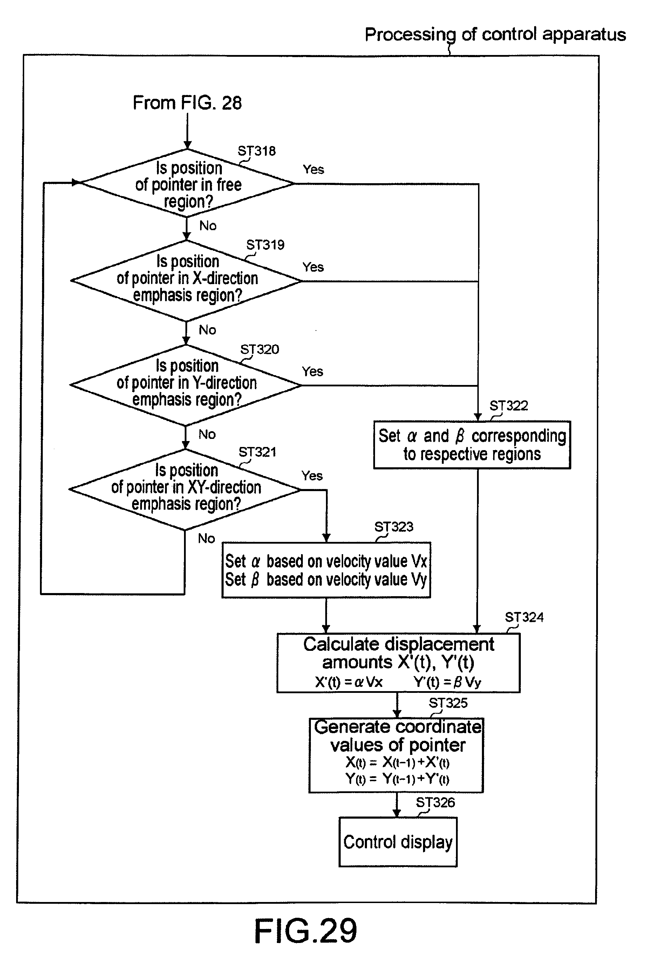

In another embodiment, the MPU 19 of the input apparatus 1 calculates, in accordance with the program stored in the built-in non-volatile memory, the velocity values based on the detection values detected by the sensor unit 17. The input apparatus 1 transmits information on the velocity values via the antenna 22, and the control apparatus 40 receives the information on the velocity values. The MPU 35 of the control apparatus 40 calculates the displacement amounts of the pointer 2 on the screen 3 by respectively multiplying the velocity values by predetermined values corresponding to the respective regions on the screen 3, and controls display so as to move the pointer 2 (see Figs. 28 and 29).

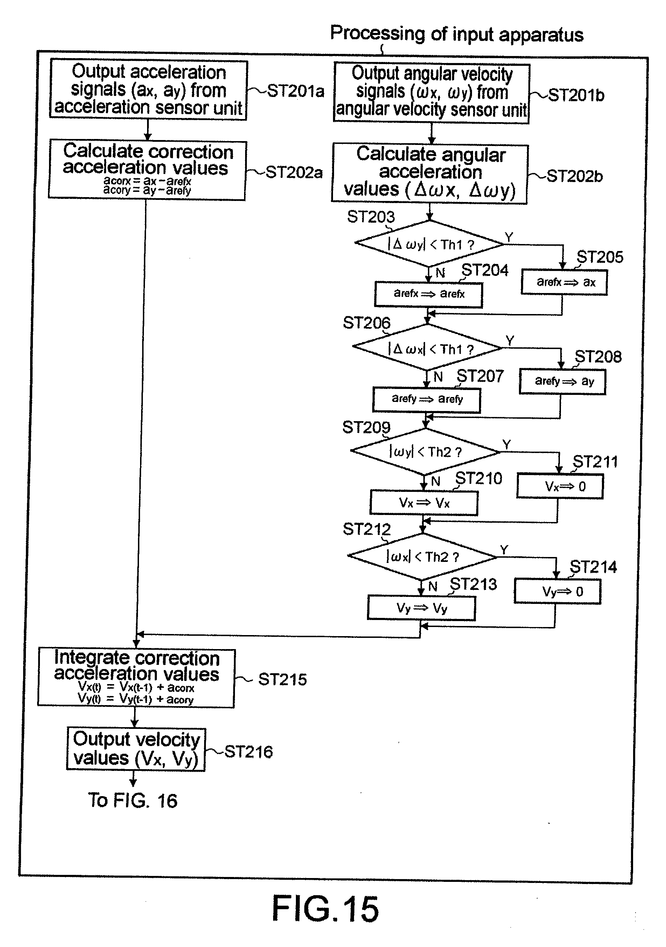

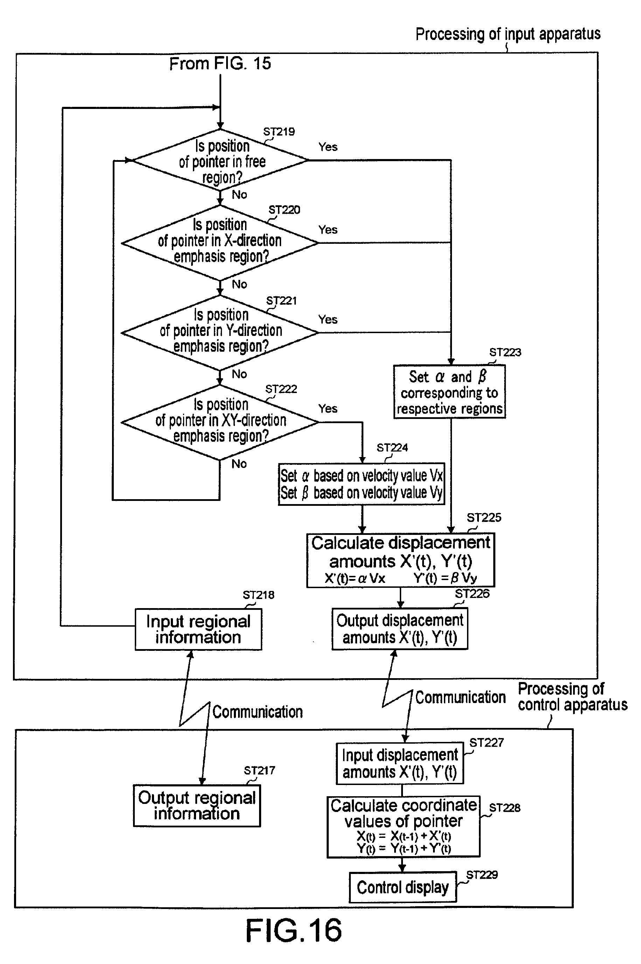

In still another embodiment, the MPU 19 of the input apparatus 1 calculates, in accordance with the program stored in the built-in non-volatile memory, the displacement amounts of the pointer on the screen based on detection values detected by the sensor unit 17 and regional information transmitted from the control apparatus 40. Here, a dimension of the displacement amounts is used for the control of the movement of the pointer 2, and information on the displacement amount dimension is transmitted to the control apparatus 40 (see Figs. 15 and 16).

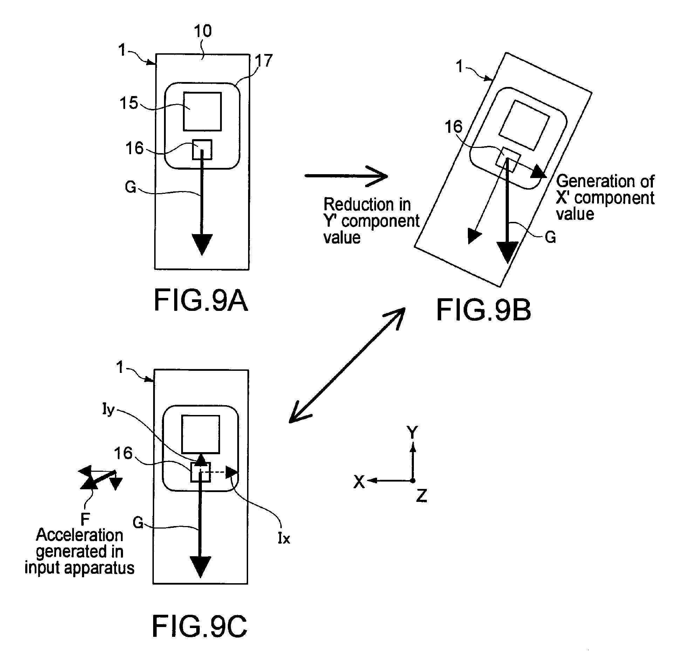

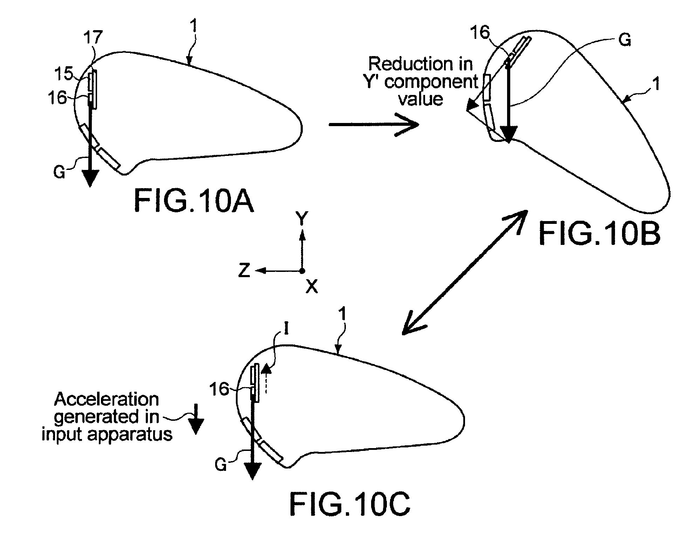

Next, a description will be given on a gravitational effect with respect to the acceleration sensor unit 16. Figs. 9 and 10 are diagrams therefor. Figs. 9 are diagrams showing the input apparatus 1 seen from the Z direction. Figs. 10 are diagrams showing the input apparatus 1 seen from the X direction.

In Fig. 9A, the input apparatus 1 is in the reference position and is held still. At this time, an output of the first acceleration sensor 161 is substantially 0, and an output of the second acceleration sensor 162 is an output corresponding to a gravity acceleration G. However, as shown in Fig. 9B, for example, in a state where the input apparatus 1 is tilted in the roll direction, the first and second acceleration sensors 161 and 162 respectively detect acceleration values of tilt components of the gravity acceleration G.

In this case, the first acceleration sensor 161 detects the acceleration in the X'-axis direction even when the input apparatus 1 is not actually moved in the yaw direction in particular. The state shown in Fig. 9B is equivalent to a state where, when the input apparatus 1 is in the reference position as shown in Fig. 9C, the acceleration sensor unit 16 has received inertial forces Ix and Iy as respectively indicated by arrows with broken lines, thus being undistinguishable by the acceleration sensor unit 16. As a result, the acceleration sensor unit 16 judges that an acceleration in a downward lefthand direction as indicated by an arrow F is applied to the input apparatus 1 and outputs a detection signal different from the actual movement of the input apparatus 1. In addition, because the gravity acceleration G constantly acts on the acceleration sensor unit 16, an integration value is increased and an amount by which the pointer 2 is displaced in the downward oblique direction is increased at an accelerating pace. When the state is shifted from that shown in Fig. 9A to that shown in Fig. 9B, it is considered that inhibition of the movement of the pointer 2 on the screen 3 is an operation that intrinsically matches the intuitive operation of the user.

The same holds true also when the input apparatus 1 is rolled in the pitch direction from the reference position as shown in Fig. 10A to tilt as shown in Fig. 10B, for example. In such a case, because the gravity acceleration G detected by the second acceleration sensor 162 at the time the input apparatus 1 in the reference position decreases, it is difficult for the input apparatus 1 to distinguish the gravity acceleration G from the inertial force I in the pitch direction as shown in Fig. 10C.

To reduce such a gravitational effect with respect to the acceleration sensor unit 16 as much as possible, the control apparatus 40 of this embodiment uses angular velocity values detected by the angular velocity sensor unit 15 of the input apparatus 1 to calculate the velocity values of the input apparatus 1. After that, the control apparatus 40 calculates the displacement amounts of the pointer by multiplying the velocity values (corresponding displacement amounts) by predetermined values in accordance with the respective regions on the screen 3, and controls display on the screen 3.

First, descriptions will be given on an operation of the control apparatus 40 up to calculating the velocity values (corresponding displacement amounts) of the input apparatus 1. Fig. 11 is a flowchart showing the operation.

Power of the input apparatus 1 is turned on. For example, the user turns on a power supply switch or the like provided to the input apparatus 1 or the control apparatus 40 to turn on the power of the input apparatus 1. Upon turning on the power, biaxial acceleration signals (first and second acceleration values $a_x$ and $a_y$) are output from the acceleration sensor unit 16 (Step 101a). The acceleration signals are signals corresponding to the position of the input apparatus 1 at a point when the power is turned on (hereinafter, referred to as initial position).

There are cases where the initial position of the input apparatus 1 is the reference position. However, a position at which the entire amount of the gravity acceleration in the X'-axis direction is detected, that is, a position at which the output of the first acceleration sensor 161 is the acceleration value corresponding to the amount of the gravity acceleration and the output of the second acceleration sensor 162 is 0 is also possible. As a matter of course, as the initial position, a position tilted as shown in Fig. 9B is also possible.

The transmitting device 21 of the input apparatus 1 outputs the biaxial acceleration signals ($a_x$, $a_y$) to the control apparatus 40 from the antenna 22 every predetermined number of clocks (Step 102).

The MPU 35 of the control apparatus 40 acquires the acceleration signals ($a_x$, $a_y$) from the acceleration sensor unit 16 of the input apparatus 1 via the antenna 39 every predetermined number of clocks (Step 103). Upon acquisition of the second acceleration signals ($a_x$, $a_y$) and the subsequent acceleration signals, the MPU 35 performs the following calculation to remove the gravitational effect. Specifically, as in the following Equations (1) and (2), the MPU 35 subtracts gravity acceleration components (first $a_x$ (= $a_{refx}$) and $a_y$ (= $a_{refy}$)) in the X'- and Y'-axis directions acquired last time from the currently-obtained acceleration values $a_x$ and $a_y$, respectively, to thereby generate a first correction respectively, to thereby generate a first correction acceleration value $a_{corx}$ and a second correction acceleration value $a_{cory}$ (Step 104).

$$a_{corx} = a_x - a_{refx} \cdots (1)$$

$$a_{cory} = a_y - a_{refy} \ \ldots \ (2)$$

Hereinafter, $a_{refx}$ and $a_{refy}$ will be referred to as reference acceleration value on the X' axis and reference acceleration value on the Y' axis (first reference acceleration value and second reference acceleration value), respectively. The $a_{refx}$ and $a_{refy}$ used in the first calculation of Step 104 by the MPU 35 of the control apparatus 40 since turning on of the power of the input apparatus 1 are acceleration signals $a_x$ and $a_y$ detected right after the turning on of the power.
As shown in Equations (3) and (4), the MPU 35 calculates a first velocity value $V_x$ and a second velocity value $V_y$ by respectively adding the first and second correction acceleration values $a_{corx}$ and $a_{cory}$ to the velocity values, that is, by an integration operation (Step 118).

$$V_x(t) \ = \ V_x(t-1) \ + \ a_{corx} \ \ldots \ (3)$$

$$V_y(t) \ = \ V_y(t-1) \ + \ a_{cory} \ \ldots \ (4)$$

$V_x(t)$ and $V_y(t)$ represent the currently-obtained velocity values and $V_x(t-1)$ and $V_y(t-1)$ represent the velocity values obtained last time.
Meanwhile, upon turning on the power of the input apparatus 1, biaxial angular velocity signals (first and second angular velocity values $\omega_x$ and $\omega_y$) are output from the angular velocity sensor unit 15 (Step 101b). The input apparatus 1 outputs the biaxial angular velocity signals ($\omega_x$, $\omega_y$) to the control apparatus 40 from the antenna 22 every predetermined number of clocks (Step 102).
Upon acquisition of the signals via the antenna 39 (Step 103), the MPU 35 of the control apparatus 40 respectively calculates angular acceleration values (first angular acceleration value $\Delta\omega_x$ and second angular acceleration value $\Delta\omega_y$) by a derivation operation (Step 105).
The MPU 35 judges whether absolute values $|\Delta\omega_x|$ and $|\Delta\omega ay|$ of the $\Delta\omega_x$ and $\Delta\omega_y$, respectively, are smaller than a threshold value Th1 (Steps 106 and 109). When $|\Delta\omega_x| \geq$ Th1, the MPU 35 uses the first reference acceleration value $a_{refx}$ as it is and does not update it (Step 107). Similarly, when $|\Delta\omega_y| \geq$ Th1, the MPU 35 uses the second reference acceleration value $a_{refy}$ as it is and does not update it (Step 110).
A value close to 0 is set as the threshold value Th1. The threshold value Th1 takes into account the angular velocity values that are detected due to a hand movement of the user, a DC offset, or the like even when the user is consciously holding the input apparatus 1 still. Thus, the pointer 2 is prevented from being moved during display due to a hand movement or a DC offset in the case where the user is consciously holding the input apparatus 1 still.
Reasons for performing the processing as described above are as follows.

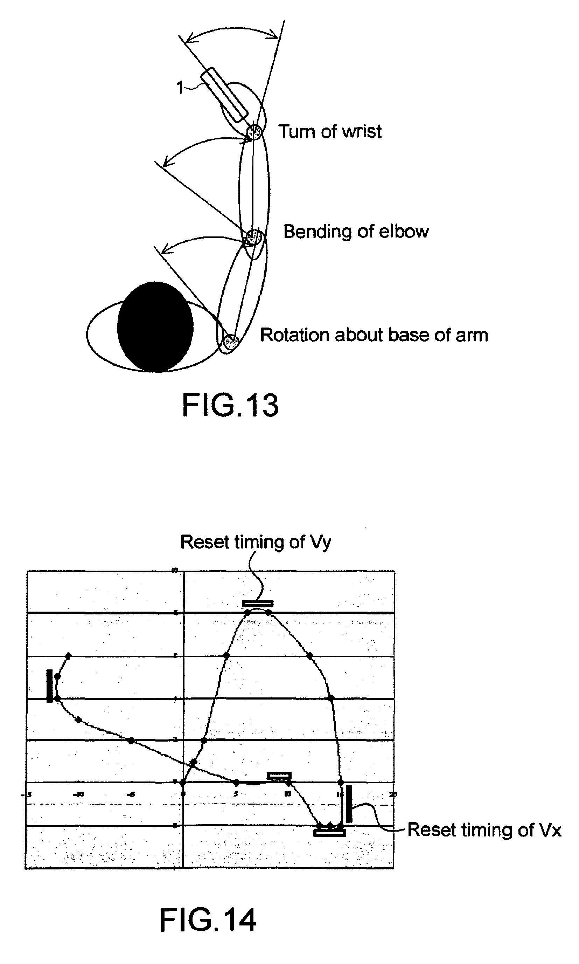

Fig. 13 is a top view of the user operating the input apparatus 1. When the user operates the input apparatus 1 naturally, the operation is made by at least one of a rotation from a base of an arm, bending of an elbow, and a turn of a wrist. Therefore, generation of the acceleration leads to generation of the angular acceleration. Specifically, the acceleration is assumed to be subservient to the angular acceleration generated in the same direction as the acceleration. Therefore, by the MPU 35 monitoring the second angular acceleration value $|\Delta\omega_y|$, it is possible to judge whether to update the first reference acceleration value $a_{refx}$ in the same direction, and judge whether to eventually correct the first correction acceleration value $a_{corx}$ from Equation (1). The same holds true for the first angular acceleration value $|\Delta\omega_x|$.
More specifically, when the second angular acceleration value $|\Delta\omega_y|$ is equal to or larger than the threshold value Th1, the MPU 35 of the control apparatus 40 judges that the input apparatus 1 is moving in the yaw direction. In this case, the MPU 35 does not update the first reference acceleration value $a_{refx}$. As a result, the MPU 35 does not correct the first correction acceleration value $a_{corx}$ and continues on with the integration operation of Equation (3) based on $a_{corx}$.
Further, when the first angular acceleration value $|\Delta\omega_x|$ is equal to or larger than the threshold value Th1, the MPU 35 judges that the input apparatus 1 is moving in the pitch direction. In this case, the MPU 35 does not update the second reference acceleration value $a_{refy}$. As a result, the MPU 35 does not correct the second correction acceleration value $a_{cory}$ and continues on with the integration operation of Equation (4) based on $a_{cory}$.
Meanwhile, when the second angular acceleration value $|\Delta\omega_y|$ is smaller than the threshold value Th1 in Step 106, the MPU 35 judges that the input apparatus 1 is not moved in the yaw direction. In this case, the MPU 35 updates the first reference acceleration value $a_{refx}$ to the currently-obtained (latest) detection value $a_x$, to thereby correct the first correction acceleration value $a_{corx}$ using Equation (1) (Step 108) . The latest detection value $a_x$ is a detection value obtained while the input apparatus 1 is held almost still, thus being a component value by the gravity acceleration.
Similarly, when the first angular acceleration value $|\Delta\omega_x|$ is smaller than the threshold value Th1 in Step 109, the MPU 35 judges that the input apparatus 1 is not moved in the pitch direction. In this case, the MPU 35 updates the second reference acceleration value $a_{refy}$ to the currently-obtained (latest) detection value $a_y$, to thereby correct the second correction acceleration value $a_{cory}$ using Equation (2) (Step 111).

It should be noted that in this embodiment, the threshold values in both the yaw direction and the pitch direction have been set to the same value Th1. However, different threshold values may be used for those directions.

In the above description, the angular acceleration values $\Delta\omega_x$ and $\Delta\omega_y$ have been monitored, but the MPU 35 can also monitor the angular velocity values $\omega_x$ and $\omega_y$ to correct the velocity values calculated in Equations (3) and (4). Based on the same theory as that of Fig. 13, assuming that generation of the velocity leads to generation of the angular velocity, it can be assumed that the velocity is subservient to the angular velocity in the same direction as the velocity.

Specifically, when the absolute value of the second angular velocity value $|\omega_y|$ is equal to or larger than a threshold value Th2 (NO in Step 112), the MPU 35 judges that the input apparatus 1 is moved in the yaw direction. In this case, the MPU 35 does not correct the first velocity value $V_x$ (Step 113). The same holds true for the absolute value of the first angular velocity value $|\omega_x|$ (NO in Step 115, and Step 116).

The threshold value Th2 also only needs to be set in the same manner as the threshold value Th1.

On the other hand, when the absolute value of the second angular velocity value $|\Delta_y|$ is smaller than the threshold value Th2 (YES in Step 112), the MPU 35 judges that the input apparatus 1 is not moved in the yaw direction. In this case, the MPU 35 corrects the first velocity value $V_x$ to, for example, 0 to reset the value (Step 114). The same holds true for the absolute value of the first angular velocity value $|\omega_x|$ (YES in Step 115, and Step 117).

The MPU 35 calculates the velocity values $V_x$ and $V_y$ in both directions as described above.

As described above, the reference acceleration values $a_{refx}$ and $a_{refy}$ are updated and the correction acceleration values $a_{corx}$ and $a_{cory}$ are corrected when the input apparatus 1 is held almost still, with the result that the gravitational effect with respect to the acceleration sensor unit 16 can be suppressed. In addition, because the correction acceleration values $a_{corx}$ and $a_{cory}$ are corrected using Equations (1) and (2) upon update of the reference acceleration values $a_{refx}$ and $a_{refy}$, a DC level is also corrected, thereby solving the problem regarding the DC offset. Further, because the velocity values are corrected so as to be reset to 0 when the input apparatus 1 is held almost still, integration errors can also be suppressed. When an integration error occurs, the pointer 2 moves on the screen 3 irrespective of the fact that the user has stopped moving the input apparatus 1.

Moreover, in this embodiment, because the first reference acceleration value $a_{refx}$ and the second reference acceleration value $a_{refy}$ are updated individually, when even one of the angular acceleration values in the yaw direction and the pitch direction becomes smaller than the threshold value, a correction thereof is performed. Therefore, it is possible to update the first reference acceleration value $a_{refx}$ or the second reference acceleration value $a_{refy}$ with a time interval short enough for practical use. The same holds true for the individual corrections of the first velocity value $V_x$ and the second velocity value $V_y$. Fig. 14 is an explanatory diagram to help understand the above description.

Fig. 14 shows a trajectory of the input apparatus 1 seen from a plane formed by the X axis and the Y axis. $V_x$ is reset to 0 if the angular velocity value $\omega_y$ in the yaw direction is substantially 0 (smaller than the threshold value Th2). $V_y$ is reset to 0 if the angular velocity value $\omega_x$ in the pitch direction is substantially 0 (smaller than the threshold value Th2).

In the related art, for suppressing the gravitational effect, in addition to the input apparatus 1 provided with six sensors, there is also an apparatus that detects a gravity vector change per unit time by a triaxial acceleration sensor to thus recognize the angular velocities in the roll direction and the pitch direction, and sets them as XY displacement amounts. Disregard the operation in the Y-axis direction, this apparatus is of a type that causes the pointer 2 to move in the X-axis direction by the user merely twisting a wrist in the roll direction. Thus, the apparatus of this type is unfit for intuitive operations by the user.

Next, a description will be given on an operation of the control apparatus 40 up to calculating displacement amounts of the pointer 2 on the screen 3 using the velocity values (corresponding displacement amounts) and controlling display thereof on the screen 3.

It should be noted that in descriptions below, the velocity value is explained as a corresponding displacement amount.

Fig. 12 is a flowchart showing the operation.

As shown in Equations (7) and (8), the MPU 35 of the control apparatus 40 multiplies the corresponding displacement amount $V_x$ in the X direction by an individually different value (weighting factor) $\alpha$ and the corresponding displacement amount $V_y$ in the Y direction by an individually different value (weighting factor) $\beta$, to individually and respectively calculate displacement amounts X'(t) and Y'(t) (first and second displacement amounts) for moving the pointer 2 on the screen 3 (Step 126). The values $\alpha$ and $\beta$ are, for example, stored in the ROM 37 as a table according to the respective regions on the screen, or set appropriately according to a program.

$$X'(t) = \alpha V_x \quad \dots \quad (7)$$

$$Y'(t) = \beta V_y \quad \dots \quad (8)$$

As described above, the screen 3 displayed on the display apparatus 5 is sectioned into a plurality of regions (see Fig. 5). Here, for example, the region 3a in which the plurality of icons 4 are displayed 1-dimensionally in the X direction is provided as an X-direction emphasis region, and the region 3b in which the plurality of icons 4 are displayed 1-dimensionally in the Y direction is provided as a Y-direction emphasis region. In addition, the region 3d in which the plurality of icons 4 are arranged regularly in the XY directions is provided as an XY-direction emphasis region, and the region 3c at which the 1-dimensional region 3a in the X direction and the 1-dimensional region 3b in the Y direction intersect and the region 3e as a region other than those described above are provided as free regions.

When the position of the pointer 2 on the screen 3 is in the free region 3c or 3e (YES in Step 120), the MPU 35 of the control apparatus 40 sets $\alpha$ and $\beta$ to be the same value such as $\alpha = 1$ and $\beta = 1$ (Step 124), and calculates the displacement amounts X'(t) and Y'(t) by multiplying the corresponding displacement amounts $V_x$ in the X direction by $\alpha$ and multiplying the corresponding displacement amounts $V_y$ in the Y direction by $\beta$ (Step 126). In this case, $\alpha$ and $\beta$ are the same value, so the movement direction of the pointer 2 on the screen 3 is the same as the operation direction of the input apparatus 1.

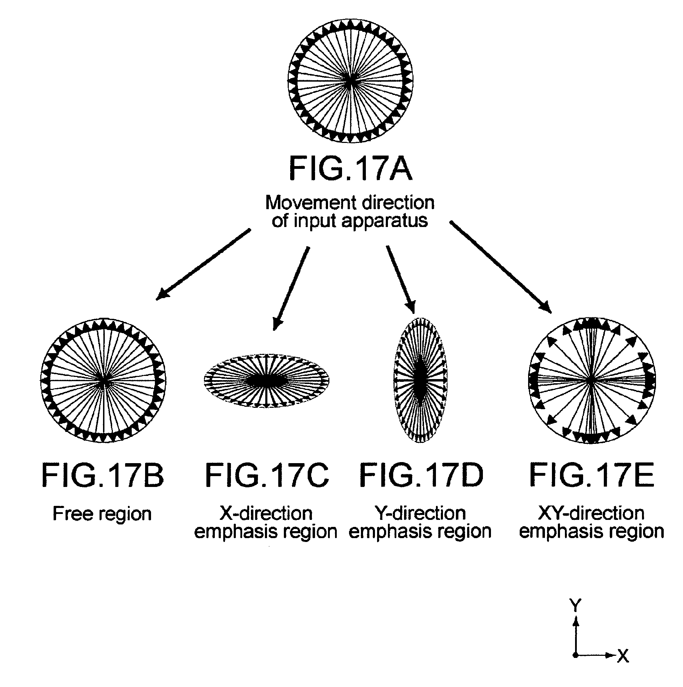

Figs. 17 are diagrams to help intuitively understand correspondences between operations of the input apparatus 1 in the X- and Y-axis directions and operations of the pointer 2 displayed on the screen 3 in the respective regions.

Fig. 17A is a diagram showing the operations of the input apparatus 1 in the X- and Y-axis directions, and Fig. 17B is a diagram showing the operations of the pointer 2 displayed on the screen 3 in the free regions 3c and 3e. It should be noted that Fig. 17C is a diagram showing the operations of the pointer 2 in the X-direction emphasis region 3a, and Fig. 17D is a diagram showing the operations of the pointer 2 in the Y-direction emphasis region 3b. Further, Fig. 17E is a diagram showing the operations of the pointer in the XY-direction emphasis region 3d.

The arrows shown in Fig. 17A represent movement directions of the input apparatus 1 and movement amounts thereof per unit time. In other words, the arrows shown in Fig. 17A represent velocity vectors of the input apparatus 1. Further, the arrows shown in Figs. 17B to 17E represent movement directions of the pointer 2 and movement amounts thereof per unit time in the respective regions, which correspond to the respective arrows of the input apparatus 1 shown in Fig. 17A, that is, velocity vectors of the pointer 2 in the respective regions.

When the position of the pointer 2 on the screen 3 is in the X-direction emphasis region 3a (YES in Step 121), the MPU 35 sets $\alpha$ to be larger than $\beta$ like $\alpha = 1$ any $\beta = 1/2$ (Step 124), and calculates the displacement amounts X'(t) and Y'(t) individually by multiplying the corresponding displacement amounts $V_x$ and $V_y$ by the individually-different values $\alpha$ and $\beta$, respectively (Step 126). In this case, the movement direction of the pointer 2 on the screen 3 is biased in the X direction with respect to the operation direction of the input apparatus 1 (see Fig. 17C). By prioritizing the movement direction of the pointer 2 in the X direction over the operation direction of the input apparatus 1 as described above, even when the user is incapable of moving the input apparatus 1 only in the X direction, it becomes difficult for the pointer 2 to slide out of the X-direction emphasis region 3a. Specifically, selection of the icons 4 arranged 1-dimensionally in the X direction is facilitated, whereby operability of the pointer 2 using the input apparatus 1 is improved.

When the position of the pointer 2 on the screen 3 is in the Y-direction emphasis region 3b (YES in Step 122), the MPU 35 sets $\beta$ to be larger than $\alpha$ like $\alpha = 1/2$ and $\beta = 1$ (Step 124), and calculates the displacement amounts X'(t) and Y'(t) individually by multiplying the corresponding displacement amounts $V_x$ and $V_y$ by the individually-different values $\alpha$ and $\beta$, respectively (Step 126). In this case, the movement direction of the pointer 2 on the screen 3 is biased in the Y direction with respect to the operation direction of the input apparatus 1 (see Fig. 17D). By prioritizing the movement direction of the pointer 2 in the Y direction over the operation direction of the input apparatus 1 as described above, operability of the pointer 2 in the Y-direction emphasis region is improved.

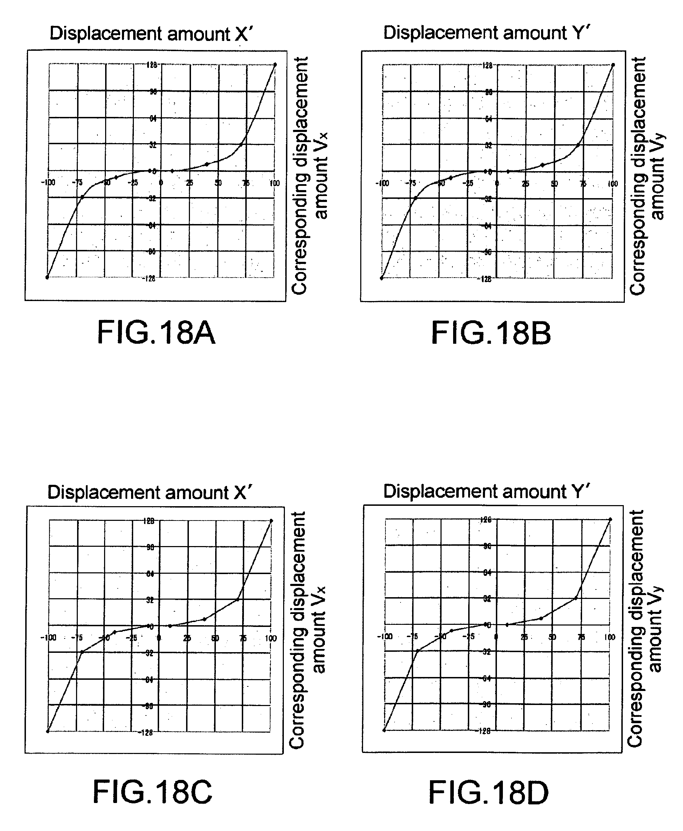

Fig. 18A is a diagram showing an example of a relationship between the displacement amount X'(t) and the first corresponding displacement amount $V_x$ of the pointer 2 in the X direction in the XY-direction emphasis region 3d, and Fig. 18B is a diagram showing an example of a relationship between the displacement amount Y'(t) and the second corresponding displacement amount $V_y$ of the pointer 2 in the Y direction in the XY-direction emphasis region 3d. It should be noted that Figs. 18C and 18D are each a diagram obtained by connecting a plurality of points with straight lines to form a curve.

When the position of the pointer 2 is in the XY-direction emphasis region 3d (YES in Step 123), the MPU 35 sets the value $\alpha$ based on the corresponding displacement amount $V_x$ (Step 125) and calculates the first displacement amount X'(t) by multiplying the corresponding displacement amount $V_x$ by $\alpha$ (Step 126). In addition, the MPU 35 sets the value $\beta$ based on the corresponding displacement amount $V_y$ (Step 125) and calculates the second displacement amount Y'(t) by multiplying the corresponding displacement amount $V_y$ by the value $\beta$ (Step 126).

As shown in Figs. 18A and 18B, upon an increase in absolute values of the corresponding displacement amounts $V_x$ and $V_y$, the absolute values of the displacement amounts X'(t) and Y'(t) of the pointer 2 in the X direction and the Y direction, respectively, increase sharply. In other words, $\alpha$ and $\beta$ in the XY-direction emphasis region 3d are set such that, instead of being constant, the absolute values of $\alpha$ and $\beta$ increase along with the increase in absolute values of the corresponding displacement amounts $V_x$ and $V_y$, respectively. As described above, the values $\alpha$ and $\beta$ may be set by the MPU 35 based on the table recorded in the ROM 37, or may be set using a dedicated program.

By setting $\alpha$ and $\beta$ as described above, in a case where the corresponding displacement amount $V_x$ in the X direction is even slightly larger than the corresponding displacement amount $V_y$, that is, in a case where the operation direction of the input apparatus 1 is tilted even slightly in the X-axis direction, the displacement amount X'(t) in the X direction increases sharply as compared to the displacement amount Y'(t) in the Y direction. Therefore, the movement direction of the pointer 2 on the screen 3 is biased in the X-axis direction (see Fig. 17E). On the other hand, when the operation direction of the input apparatus 1 is tilted even slightly in the Y-axis direction, the movement direction of the pointer 2 on the screen 3 is biased in the Y-axis direction (see Fig. 17E).

As described above, by the movement direction of the pointer 2 in the XY-direction emphasis region 3d being specialized in the X- and Y-axis directions, the user can readily select the icon 4 even when the icons 4 are arranged so as to facilitate operations using an arrow key as shown in Fig. 5.

Further, it is possible to set the region 3a in which the icons 4 are arranged in the X direction and the region 3b in which the icons 4 are arranged in the Y direction shown in Fig. 5 as the XY-direction emphasis region. In this case, for example, if the user is to select the icon 4 arranged in the region 3a, merely by the operation direction of the input apparatus 1 being a direction close to the X direction, the pointer 2 hardly slides out of the region 3a. On the other hand, merely by the operation direction of the input apparatus 1 being a direction close to the Y direction, the user can cause the pointer 2 to slide out of the region 3a.

The MPU 35 generates coordinate values X(t) and Y(t) of the pointer 2 from the displacement amounts X'(t) and Y'(t) calculated as described above (Step 127), and controls display so as to move the pointer 2 on the screen 3 (Step 128).

It should be noted that the user may be allowed to arbitrarily adjust $\alpha$ and $\beta$ in the X-direction emphasis region 3a and the Y-direction emphasis region 3b using the input apparatus 1.

Moreover, it is also possible to set the value of $\beta$ in the X-direction emphasis region 3a to 0 or the value of $\alpha$ in the Y-direction emphasis region 3b to 0 by making an adjustment thereof by the user or by storage in the table in advance. In this case, the pointer 2 moves only in the X direction in the X-direction emphasis region 3a and the pointer 2 moves only in the Y direction in the Y-direction emphasis region 3b.

Incidentally, presumably, there are cases where the user wishes to move the pointer 2 out of the X-direction emphasis region 3a or the Y-direction emphasis region 3b to shift the operation to that in other regions. In this case, for example, a cancel function may be allocated to a press-and-hold operation of the button 12 of the input apparatus 1 to allow the pointer 2 to operate in the same manner as in the free regions 3c and 3e while the user is press-and-holding the button 12. Accordingly, it is possible to cause the pointer to easily slide out of the X-direction emphasis region 3a or the Y-direction emphasis region 3b when the user is not wishing for the operations in those regions, thereby enabling a quick switch to operations in other regions.

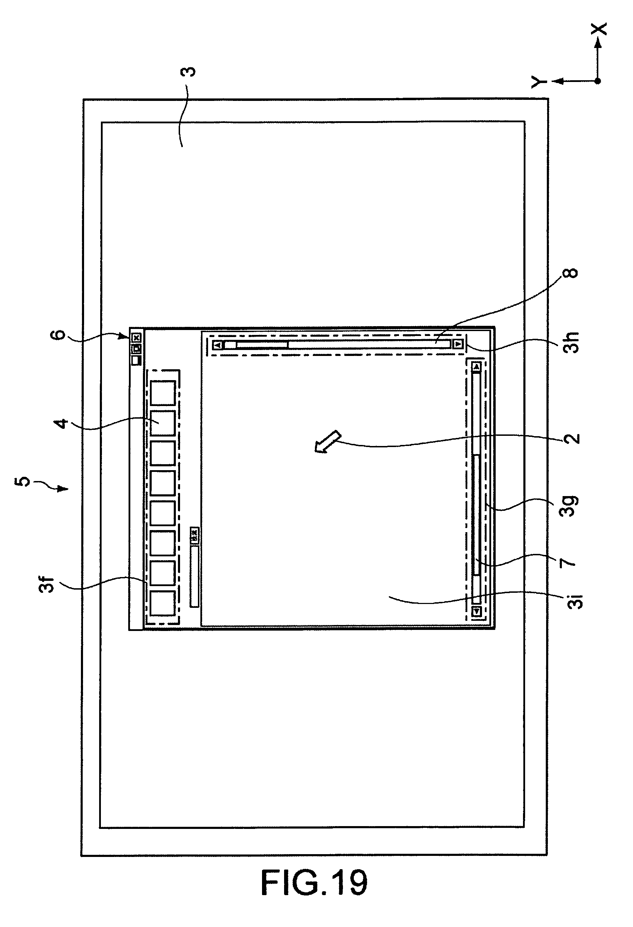

Fig. 19 is a diagram showing an example in which a PC operation image is displayed on the screen 3.

As shown in the figure, the plurality of icons 4 are displayed 1-dimensionally in the X direction at an upper portion of an operation image 6 and a horizontal scrollbar 7 is displayed 1-dimensionally in the X direction at a lower portion of the operation image 6. Further, a vertical scrollbar 8 is displayed 1-dimensionally in the Y direction at a right-hand side portion of the image. In this case, for example, a region 3f in which the plurality of icons 4 are displayed in the X direction and a region 3g in which the horizontal scrollbar 7 is displayed are sectioned as the X-direction emphasis region, a region 3h in which the vertical scrollbar is displayed is sectioned as the Y-direction emphasis region, and a region 3i as a region other than those described above is sectioned as the free region.

When the position of the pointer 2 on the screen 3 is in the X-direction emphasis region 3f or 3g, the MPU 35 sets $\alpha$ to have a larger value than $\beta$ (Steps 121 and 124). The MPU 35 calculates the displacement amounts X'(t) and Y'(t) by multiplying the corresponding displacement amounts $V_x$ and $V_y$ by $\alpha$ and $\beta$, respectively (Step 126), and controls display so as to move the pointer 2 on the screen 3 (Steps 127 and 128).

On the other hand, when the position of the pointer 2 is in the Y-direction emphasis region 3h, the MPU 35 sets $\beta$ to have a larger value than $\alpha$ (Steps 122 and 124) and calculates the displacement amounts X'(t) and Y'(t) (Step 126). The control apparatus 40 controls display using the displacement amounts so that the pointer 2 moves on the screen 3 (Steps 127 and 128).

When the position of the pointer 2 is in the other region 3i, the MPU 35 sets, for example, $\alpha = \beta$, and calculates the displacement amounts X'(t) and Y'(t) (Steps 120, 124, and 126), to thus control display so as to move the pointer 2 on the screen 3 (Steps 127 and 128).

It should be noted that the sectioning of the regions may be changed accompanying contraction, expansion, and movement of the operation image 6, switch to another operation image 6, or pop-up and deletion of the icons 4.

Figs. 28 and 29 are flowcharts showing an operation of the control system according to another embodiment described above. In the control system 100 of this embodiment, the input apparatus 1 executes the processing up to the calculation of the corresponding displacement amounts (velocity values), and the control apparatus 40 executes the rest of the processing. Typically, the input apparatus 1 executes processing similar to that of Steps 101a and 101b to 118 shown in Fig. 11 by the processing of Steps 301a and 301b to 315, to thus calculate the corresponding displacement amounts $V_x$ and $V_y$. Upon calculating the corresponding displacement amounts, the input apparatus 1 outputs information on the calculated corresponding displacement amounts (Step 316) to transmit it to the control apparatus 40. When input with the information on the corresponding displacement amounts, the MPU 35 of the control apparatus 40 calculates the displacement amounts X'(t) and Y'(t) independently by respectively multiplying the corresponding displacement amounts $V_x$ and $V_y$ by the values $\alpha$ and $\beta$ corresponding to the respective regions, and controls display so as to move the pointer 2 by the displacement amounts (Steps 317 to 326).

Figs. 15 and 16 are flowcharts showing an operation of the control system according to still another embodiment described above. In each of the flowcharts, the input apparatus 1 uses biaxial acceleration signals and biaxial angular velocity signals output from the sensor unit 17 to execute processing similar to that of Steps 101a and 101b to 119 shown in Fig. 11 through Steps 201a and 201b to 216, to thereby calculate the corresponding displacement amounts $V_x$ and $V_y$. Details thereof are the same as those of Fig. 11, so descriptions thereof will be omitted.

After calculating the corresponding displacement amounts $V_x$ and $V_y$ or before the calculation is finished, the control apparatus 40 transmits regional information (Step 217). The input apparatus 1 receives the regional information (Step 218) and multiplies the corresponding displacement amounts $V_x$ and $V_y$ by the values $\alpha$ and $\beta$, respectively, based on the regional information, to thus calculate individually the displacement amounts X'(t) and Y'(t) for moving the pointer 2 on the screen 3 (Steps 219 to 225).

Here, the regional information refers to information indicating how the screen 3 is sectioned to constitute each of the regions.

The input apparatus 1 transmits the displacement amounts X'(t) and Y'(t) as displacement amount information (Step 226). The control apparatus 40 receives the displacement amount information (Step 227), calculates the coordinate values X(t) and Y(t) of the pointer (Step 228), and controls display so as to move the pointer 2 on the screen 3 (Step 229).

It should be noted that as is apparent from Figs. 11, 12, 15, 16, 28, and 29, up to which processing is to be executed by the input apparatus 1 and from which processing is to be executed by the control apparatus 40 can be changed appropriately.

Subsequently, an input apparatus according to another embodiment will be described.

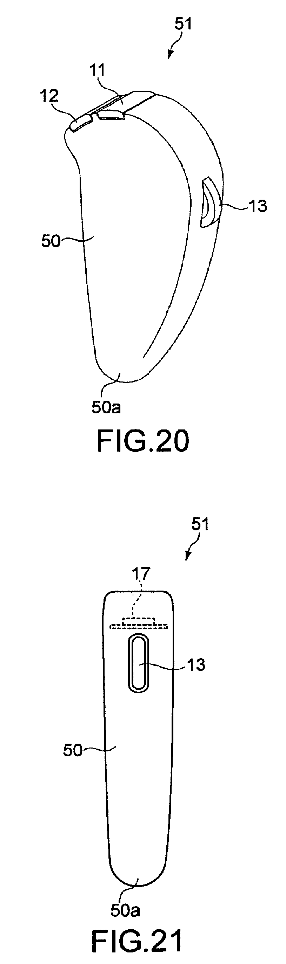

Fig. 20 is a perspective diagram showing an input apparatus 51. Fig. 21 is a side view of the input apparatus 51 seen from the wheel button 13 side. In the following, descriptions on components, functions, and the like similar to those of the input apparatus 1 according to the embodiment described with reference to Fig. 2 and the like will be simplified or omitted, and points different therefrom will mainly be described.

A casing 50 of the input apparatus 51 includes a partial sphere or partial quadric surface 50a at a predetermined position on a surface of the casing 50. Hereinafter, the partial sphere or quadric surface (50a) will be referred to as "lower curved surface" (50a) for convenience.

The lower curved surface 50a is formed at, for example, a position almost opposite to the buttons 11 and 12, that is, a position where, when a user holds the input apparatus 51, a pinky is located closer to the lower curved surface 50a than other fingers. Alternatively, in a case where, in the casing 50 elongated in one direction (Z'-axis direction), the sensor unit 17 is provided on a positive side of the Z' axis with respect to a longitudinal center of the casing 50 in the Z'-axis direction, the lower curved surface 50a is provided on a negative side of the Z' axis.

Typically, the partial sphere is substantially a hemisphere, but does not necessarily have to be a hemisphere. The quadric surface is a curved surface obtained by expanding a 2-dimensional conic curve (quadric curve) into a 3-dimensional conic curve. Examples of the quadric surface include an ellipsoid surface, an ellipsoid paraboloid surface, and a hyperbolic surface.

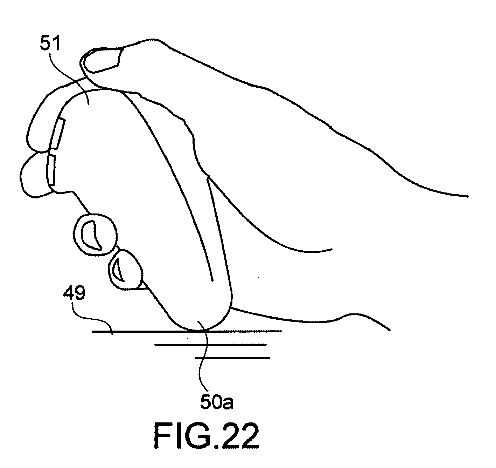

With the configuration of the casing 50 of the input apparatus 51 as described above, a user can easily operate the input apparatus 51 while causing the lower curved surface 50a of the input apparatus 51 as a fulcrum to abut on an abutment target object 49 such as a table, a chair, a floor, or a knee or thigh of a user. That is, even in the state where the lower curved surface 50a of the input apparatus 51 is abutted on the abutment target object 49, the user can easily incline the input apparatus 51 in diverse angles, thereby enabling delicate operations such as placing the pointer 2 on the icon 4. Fig. 22 is a diagram showing the state where the user operates the input apparatus 51 while causing the lower curved surface 50a to abut on the knee.

Alternatively, in this embodiment, erroneous operations due to a hand movement, which cannot be suppressed by a shake correction circuit, can be prevented from occurring, and the user is free from fatigue that is caused when the user keeps holding the input apparatus 51 in the air and operates it.

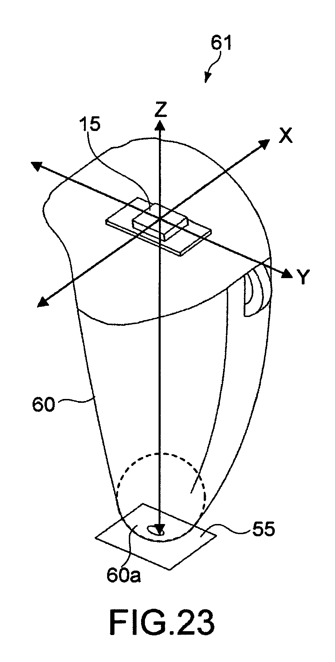

Fig. 23 is a perspective diagram of an input apparatus according to still another embodiment of the present invention.

A casing 60 of an input apparatus 61 includes, similar to the input apparatus 51 shown in Figs. 20 and 21, a lower curved surface 60a constituted of a partial sphere. A plane perpendicular to a maximum length direction (Z'-axis direction) of the casing 60 of the input apparatus 61 and is in contact with the lower curved surface 60a (hereinafter, referred to as "lower end plane 55" for convenience) is substantially parallel to a plane formed by the X axis and the Y axis (see Fig. 8) as detection axes of the angular velocity sensor unit 15 (X-Y plane).

With the structure of the input apparatus 61 as described above, in a case where the user operates the input apparatus 61 while causing the lower curved surface 60a to abut on the lower end plane 55, angular velocities applied to the input apparatus 61 are input to the angular velocity sensor unit 15 as they are. Thus, an amount of calculation required to obtain detection values from the detection signals from the angular velocity sensor unit 15 can be reduced.

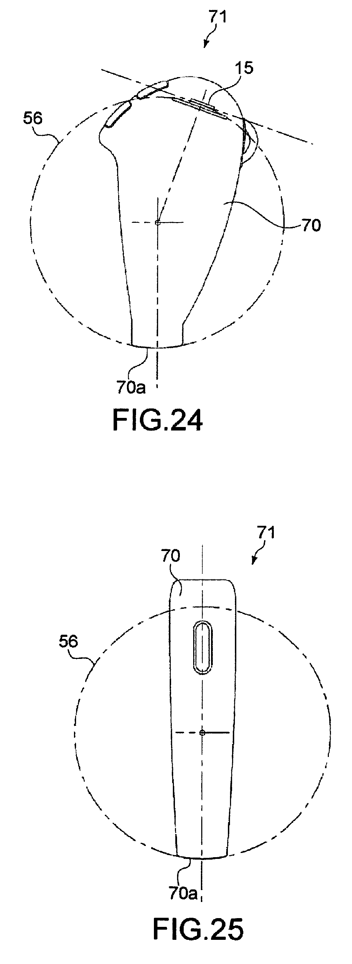

Fig. 24 is a front view showing an input apparatus according to yet another embodiment of the present invention. Fig. 25 is a side view showing the input apparatus.

A lower curved surface 70a of a casing 70 of an input apparatus 71 is, for example, a partial sphere. The lower curved surface 70a has a larger curvature radius than the lower curved surfaces 50a and 60a of the input apparatuses 51 and 61 shown in Figs. 20 and 23. The angular velocity sensor unit 15 is provided at a position at which a straight line contained in the X-Y plane formed by the X axis and the Y axis as the detection axes of the angular velocity sensor unit 15 corresponds to a tangent line of a virtual circle 56 that passes the partial sphere when seen from the X- and Y-axis directions. As long as the conditions as described above are satisfied, the angular velocity sensor unit 15 may be arranged in the casing 70 such that the X-Y plane thereof is tilted with respect to a longitudinal direction of the input apparatus 71 (see Fig. 24).

Accordingly, because a direction of the vector of the angular velocity generated when the user operates the input apparatus 71 while abutting the lower curved surface 70a thereof on the abutment target object 49 and the detection direction of the angular velocity sensor unit 15 match, a linear input is thus enabled.

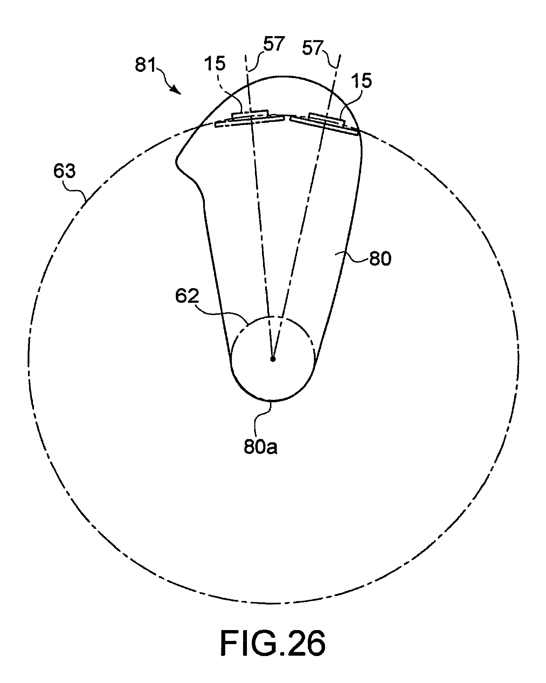

Fig. 26 is a front view of an input apparatus according to still another embodiment of the present invention.

A sphere as a lower curved surface 80a of a casing 80 of an input apparatus 81 has a curvature radius the same as or close to that shown in Fig. 23. Regarding the angular velocity sensor unit 15, a virtual straight line that passes an intersection of the X axis and the Y axis, which is a center point of the angular velocity sensor unit 15, and is orthogonal to the X axis and the Y axis passes a center point O of a first sphere 62 including the lower curved surface 80a. With the structure as described above, the first sphere 62 including the lower curved surface 80a and a second sphere 63 in which the straight line contained in the X-Y plane of the angular velocity sensor unit 15 becomes a tangent line are arranged concentrically. Therefore, the input apparatus 81 bears the same effect as the input apparatus 71 shown in Fig. 24.

It should be noted that the input apparatus 51, 61, 71, or 81 including the partial sphere or the partial quadric surface described above does not necessarily need to be operated by the user while the lower curved surface 50a, 60a, 70a, or 80a thereof is abutted against the abutment target object 49, and may of course be operated in air.

The control system described above is not limited to the above embodiments, and various modifications can be made.

In the above embodiments, the input apparatus 1 is constituted of two angular velocity sensors and two acceleration sensors, but the input apparatus 1 may be constituted of only biaxial or triaxial angular velocity sensors, or biaxial or triaxial acceleration sensors. In addition, the input apparatus may be composed of an earth magnetism sensor or an image sensor represented by a CMOS sensor.

The input apparatus or the control apparatus 40 may be structured to control display of the pointer in accordance with the angular velocity signals detected by the biaxial angular velocity sensors. In this case, the input apparatus may include only the biaxial angular velocity sensors and not the acceleration sensors. Hereinafter, a description will be given on an operation while assuming that the input apparatus 1 outputs information on an angular velocity value of an angular velocity signal to the control apparatus 40, which then receives the information and controls display of the pointer.

For example, the MPU 35 of the control apparatus 40 acquires change amounts of a yaw angle and a pitch angle per unit time. The MPU 35 generates coordinate values of the pointer 2 on the screen 3 that correspond to the acquired change amounts of the yaw angle and the pitch angle per unit time, and controls display so that the pointer 2 moves on the screen 3. The MPU 35 calculates the displacement amounts of the pointer 2 on the screen 3 per unit time that correspond to the acquired change amounts of the yaw angle and the pitch angle per unit time by a calculation based on a predetermined function or using a correspondence table stored in advance in the ROM 37 or the like. Thus, the MPU 35 can generate the coordinate values of the pointer 2.

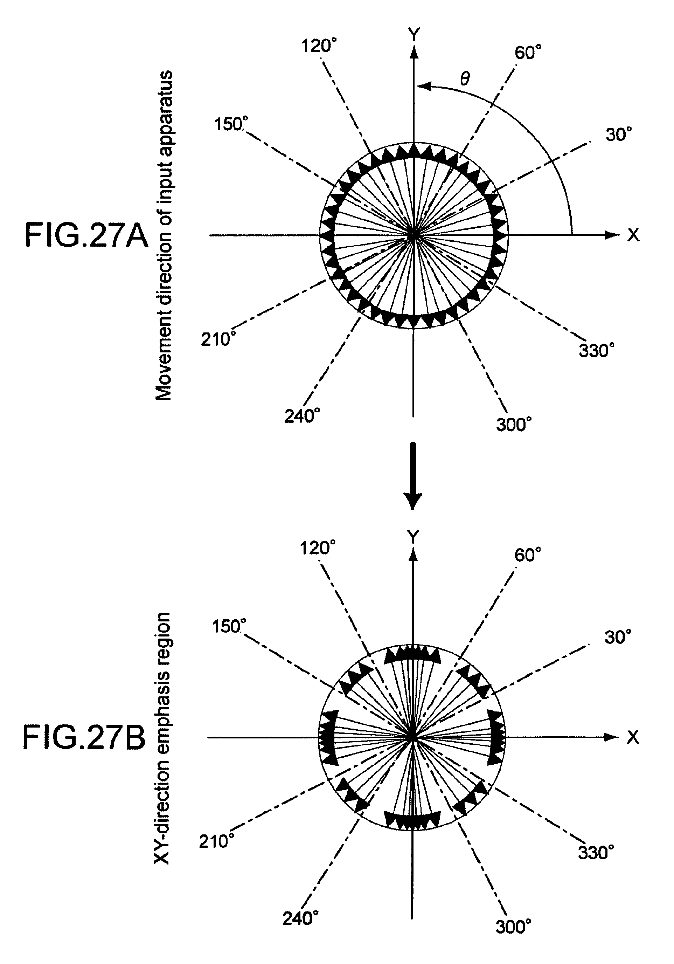

As shown in Figs. 17A and 17E, the direction of the velocity vector (arrow) of the pointer 2 in the XY-direction emphasis region is biased in the X-axis direction when the operation direction of the input apparatus 1 is tilted even slightly in the X-axis direction, and is biased in the Y-axis direction when the operation direction of the input apparatus 1 is tilted even slightly in the Y-axis direction. Specifically, the direction of the velocity vector of the pointer 2 is biased in the X- or Y-axis direction with the angles of 45°, 135°, 225°, and 315° of the velocity vector of the input apparatus 1 with respect to the X axis as boundaries. However, the operations of the pointer 2 in the XY-direction emphasis region with respect to the operation of the input apparatus 1 may be set as shown in Fig. 27B. In other words, as shown in Figs.

27A and 27B, when an angle θ of the velocity vector of the input apparatus 1 with respect to the X axis is a predetermined angle, e.g., 30° to 60°, 120° to 150°, 210° to 240°, or 300° to 330°, the direction of the velocity vector of the pointer 2 may be set to be the same as that of the velocity vector of the input apparatus 1. In this case, when the angle θ of the velocity vector of the input apparatus 1 is 150° to 210° or 60° to 120°, the velocity vector of the pointer 2 is biased to the X axis. Further, when the angle θ of the velocity vector of the input apparatus 1 is 150° to 210° or 240° to 300°, the velocity vector of the pointer 2 is biased to the Y axis.

The operations of the pointer 2 as described above can be realized by the following operation.

When the position of the pointer 2 is in the XY-direction emphasis region, the control apparatus 40 calculates Expression (9), and when Expression (9) is satisfied, sets $\alpha = \beta$ and calculates the displacement amounts X'(t) and Y'(t). On the other hand, when Expression (9) is not satisfied, $\alpha$ is set based on the corresponding displacement amount (velocity value) $V_x$ and $\beta$ is set based on the corresponding displacement amount $V_y$, for calculation of the displacement amounts X'(t) and Y'(t). The control apparatus 40 generates the coordinate values of the pointer based on the displacement amounts X'(t) and Y'(t), and controls display. Accordingly, the operations of the pointer 2 on the screen 3 as shown in Fig. 27B are realized.

$$\tan\theta1 \leq |V_y/V_x| \leq \tan\theta2 \ ... \ (9)$$

It should be noted that in the example described above, θ1 and θ2 shown in Expression (9) are 30° and 60°, respectively, but θ1 and θ2 may arbitrarily be adjusted by the user.

Next, a cellular phone according to an embodiment of the present invention will be described. In the descriptions of this embodiment, the cellular phone will be described as an example of a handheld information processing apparatus.

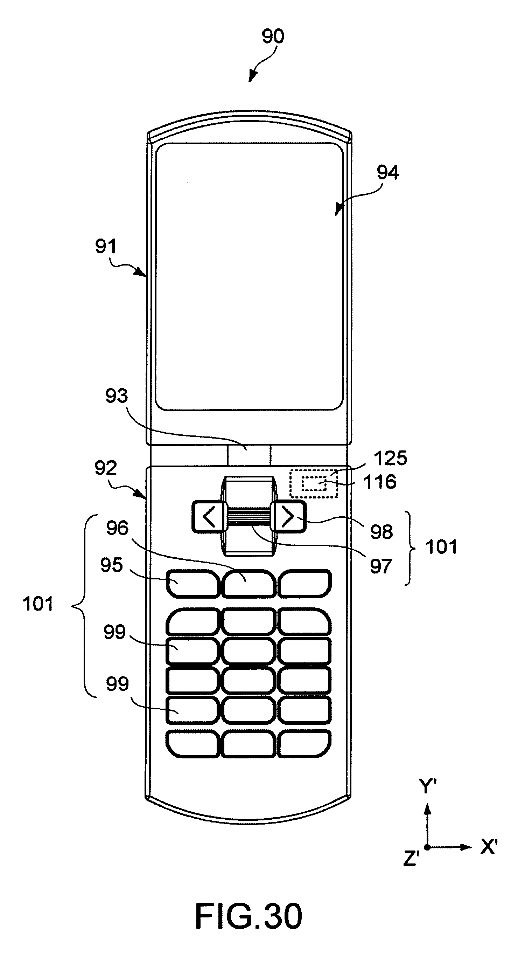

Fig. 30 is a plan view showing the cellular phone according to this embodiment. It should be noted that in the descriptions of this embodiment, as a coordinate system that moves along with a cellular phone 90, a longitudinal direction of the cellular phone will be described as the Y'-axis direction, a width direction thereof will be described as the X'-axis direction, and a thickness direction thereof will be described as the Z'-axis direction. Moreover, as an inertial coordinate system based on earth, a vertical-axis direction will be described as the Z-axis direction, and a horizontal-axis direction will be described as the X- and Y-axis directions.

As shown in Fig. 30, the cellular phone 90 includes a first casing 91 and a second casing 92, and the first casing 91 and the second casing 92 are coupled rotatably via a hinge section 93. In other words, the cellular phone 90 is of a so-called flip type.

A display section 94 is disposed on an inner surface 91a of the first casing 91. The display section 94 is constituted of, for example, a liquid crystal display or an EL (Electro-Luminescence) display, but is not limited thereto. The second casing 92 is provided with, on an inner surface 92a, an operation section 101 including a talk button 95, an enter button 96, a rotary wheel button 97, a direction input button 98, code buttons 99, and the like.

The second casing 92 has inside a circuit board 125 and an acceleration sensor unit 116 disposed on the circuit board 125. The circuit board 125 is incorporated to the second casing 90b such that a plane on which the acceleration sensor unit 116 is mounted becomes substantially parallel to an X'-Y' plane. The acceleration sensor unit 116 includes a first acceleration sensor and a second acceleration sensor. The first acceleration sensor detects an acceleration value $a_x$ in the X'-axis direction, and the second acceleration sensor detects an acceleration value $a_y$ in the Y'-axis direction.

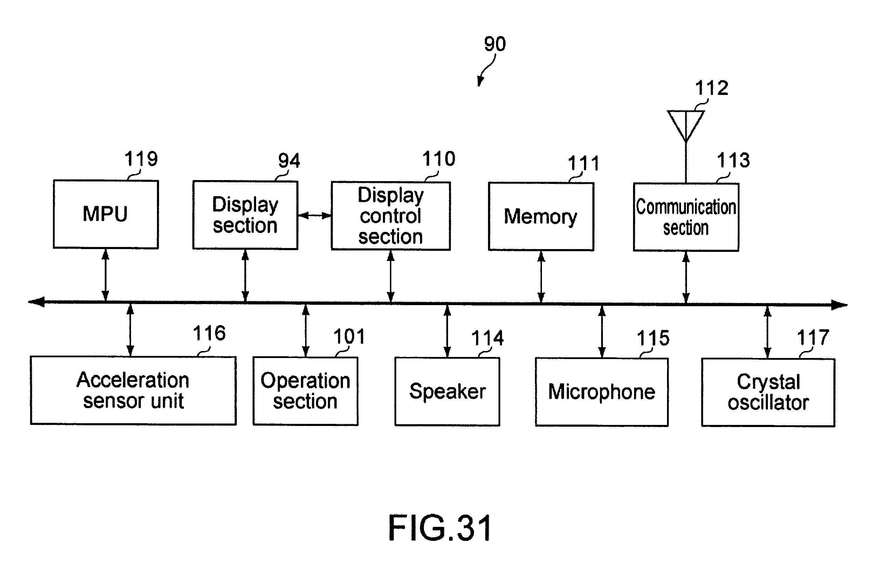

Fig. 31 is a block diagram showing an internal structure of the cellular phone 90. As shown in Fig. 31, the cellular phone 90 includes, in addition to the display section 94, the operation section 101, and the acceleration sensor unit 116, an MPU 119, a display control section 110, a memory 111, an antenna 112, a communication section 113, a speaker 114, and a microphone 115.

The antenna 112 is, for example, a built-in antenna, and transmits/receives radio waves for calls or packet communications. The communication section 113 executes processing or converting a frequency of the radio waves transmitted/received by the antenna 112, modulation, demodulation, and the like. It should be noted that data transmitted/received in the packet communication is screen data, email data, program data, and various types of other data.

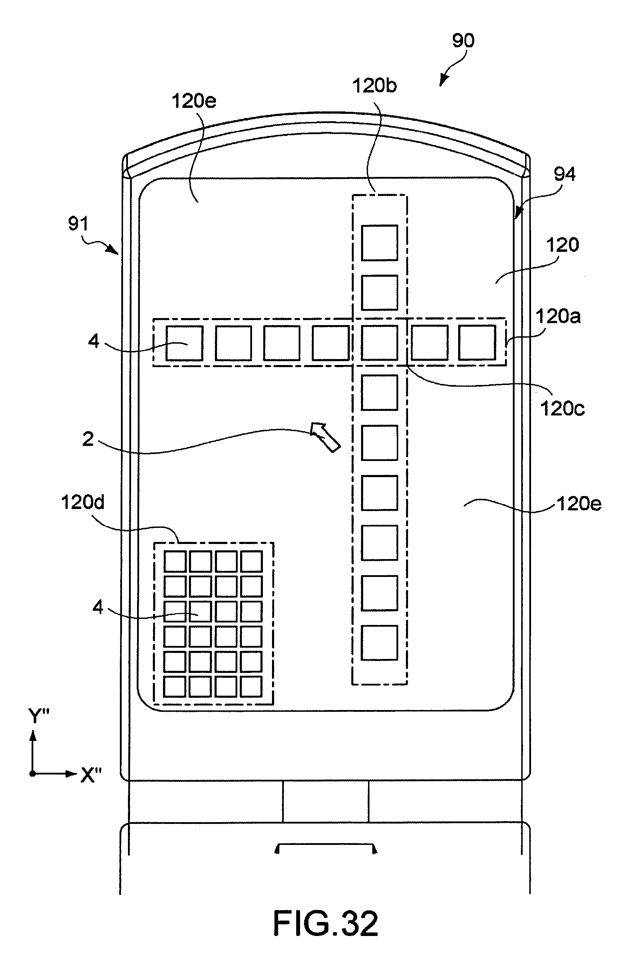

The memory 111 is constituted of, for example, a ROM (Read Only Memory) and a RAM (Random Access Memory), or a flash memory. The memory 111 stores various programs and data necessary for the cellular phone, such as a control program for the MPU 119 to control respective components, various initial settings data, phonebook data, an application for, for example, creating an email, email data, and mail address data. In addition to those various programs, the memory stores in particular a program for calculating the velocity values (corresponding displacement amounts) based on the acceleration values $(a_x, a_y)$ detected by the acceleration sensors and a program for changing the movement amounts of the pointer 2 in accordance with each of the regions sectioning the screen (image) (see Fig. 32). Moreover, the memory 111 occasionally stores data as a work region during various types of data processing of the MPU 119.

Under the control of the MPU 119, the display control section 110 mainly generates screen data to be displayed on the display section 94. The operation section 101 generates various operation signals in accordance with the user operation and outputs them to the MPU 119. A crystal oscillator 117 generates clocks and supplies them to the MPU 119.

The speaker 114 includes a digital/analog converter, an amplifier, and the like, and carries out digital/analog conversion processing and amplification processing on audio data for calls (incoming) input via the communication section 113 and audio data for ring tones (e.g., incoming alert tones), and outputs the data.

The microphone 115 includes an analog/digital converter, an amplifier, and the like, and converts analog audio data for calls (outgoing) input from the user into digital audio data and outputs it to the MPU 119. The digital audio data output to the MPU 119 is encoded and then transmitted via the communication section 113 and the antenna 112.

The MPU 119 (or CPU) exchanges signals with the respective constituent elements of the cellular phone 90, including encoding and decoding of the audio data in calls, and collectively controls the cellular phone 90. Further, particularly in this embodiment, processing for moving the pointer 2 on a display screen displayed on the display section 94 is executed based on the acceleration values from the acceleration sensor unit 116.

Fig. 32 is a diagram showing an example of a display screen 120 displayed on the display section 94. It should be noted that hereinafter, a virtual plane within the screen 120 will be described as an X''-Y'' plane.

As shown in Fig. 32, the pointer 2 is displayed on the screen 120. The cellular phone 90 displays the pointer 2 on the screen 120 when displaying a PC web screen (see Fig. 19) or when displaying a specific image on the display section 94, for example.

In addition to the pointer 2, the plurality of icons 4 are displayed on the screen 120, and the screen 120 is sectioned into a plurality of regions in relation to the arrangement of the icons 4. Typically, a region 120a in which the plurality of icons 4 are arranged 1-dimensionally in an X'' direction is sectioned as the X-direction emphasis region, and a region 120b in which the plurality of icons 4 are arranged 1-dimensionally in a Y'' direction is sectioned as the Y-direction emphasis region. Further, a region 120d in which the icons 4 are arranged regularly in X''Y'' directions is sectioned as the XY-direction emphasis region, and a region 120c at which the 1-dimensional region 120a in the X'' direction and the 1-dimensional region 120b in the Y'' direction intersect and a region 120e other than those above are sectioned as free regions.

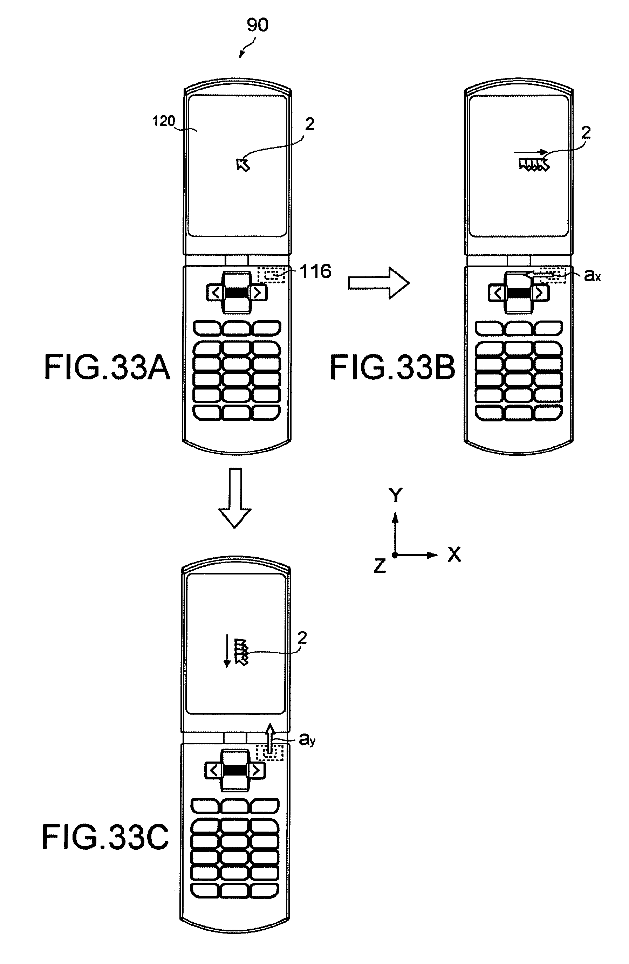

Next, typical ways of moving the cellular phone 90 will be described. Figs. 33 are explanatory diagrams therefor.

From the state where the pointer 2 is displayed at a center of the screen 120 as shown in Fig. 33A, the user moves the cellular phone 90 in the X direction within the X-Y plane (see Fig. 33B). The acceleration value $a_x$ in the X' direction is thereupon detected by the first acceleration sensor, and the pointer 2 moves in the X'' direction on the screen 120. On the other hand, from the state where the pointer 2 is displayed at the center of the screen 120, the user moves the cellular phone 90 in the Y direction (see Fig. 33C). The acceleration value $a_y$ in the Y' direction is thereupon detected by the second acceleration sensor, and the pointer 2 moves in the Y'' direction on the screen 120.

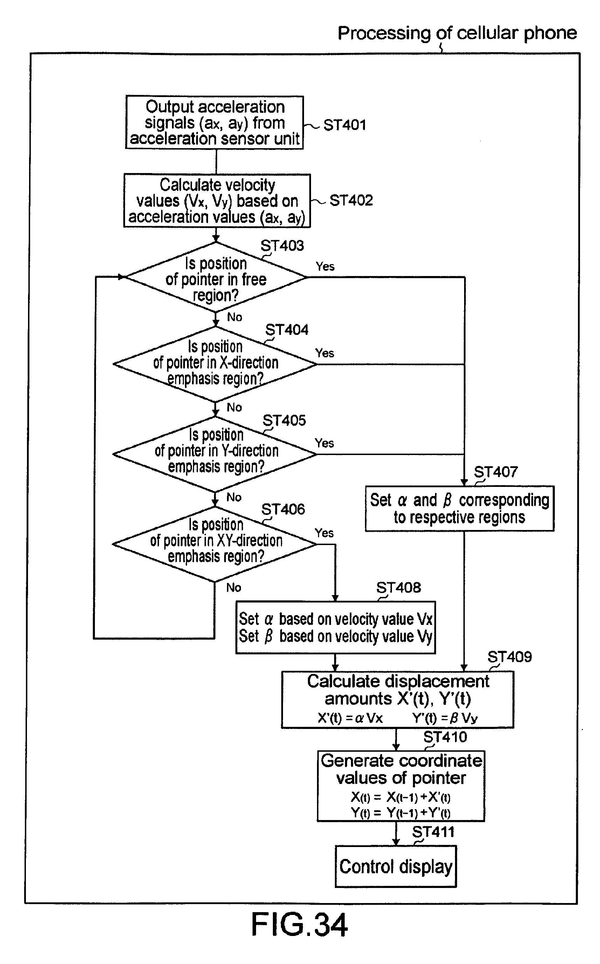

Next, internal processing of the cellular phone 90 will be described. Fig. 34 is a flowchart showing an operation of the cellular phone 90.

When the user moves the cellular phone 90 on the X-Y plane, the acceleration values ($a_x$, $a_y$) in the X'Y' directions are detected by the acceleration sensor unit 116, and a signal of the acceleration values is output from the acceleration sensor unit 116. Upon receiving the signal of the acceleration values, the MPU 119 calculates the velocity values (corresponding displacement amounts) based on the acceleration values (Step 402). Typically, the MPU 119 calculates the velocity values ($V_x$, $V_y$) by respectively adding the currently-obtained acceleration values to the acceleration values obtained last time.

Upon calculating the velocity values, the MPU 119 executes the same processing as in Steps 120 to 128 described with reference to Fig. 12 in Steps 403 to 411. In other words, the MPU 119 calculates the displacement amounts by respectively multiplying the velocity values by predetermined values in accordance with in which of the regions the pointer 2 is located, and controls display of the screen 120 so as to move the pointer 2 by the displacement amounts (Steps 403 to 411).

By the processing shown in Fig. 34, the movement of the pointer 2 can be biased in the X'' or Y'' direction on the screen 120 in accordance with each of the regions sectioning the screen 120 (see Figs. 17 and 27), thus improving operability of the pointer 2.

In this embodiment, the sensors are described as two acceleration sensors. However, the sensors are not limited thereto and may be two angular velocity sensors. In this case, a first angular velocity sensor detects an angular velocity about the Z' axis and a second angular velocity sensor detects an angular velocity about the X' axis. In this case, when the user swings the cellular phone 90 using a rotation of a wrist or an elbow with the Z axis as a center axis, the pointer 2 moves in the X'' direction on the screen 120. On the other hand, when the user swings the cellular phone with the X axis as the center axis, the pointer 2 moves in the Y'' direction.

In this embodiment, the cellular phone 90 is taken as an example of the handheld information processing apparatus. However, the handheld information processing apparatus is not limited thereto, and may instead be a PDA (Personal Digital Assistant), a portable game device, and the like.

**EP 2 161 651 B1**

Brief Description of Drawings

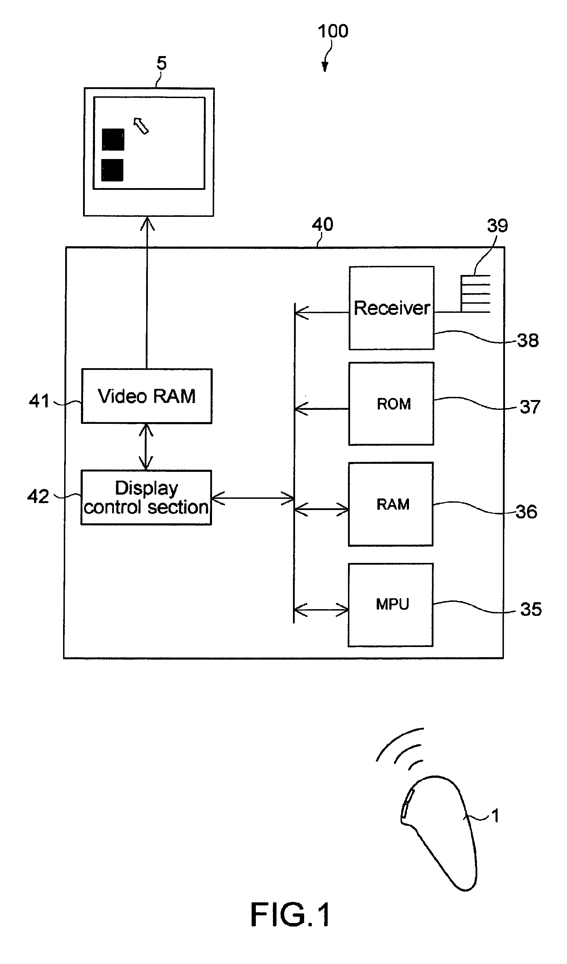

[Fig. 1] A diagram showing a control system according to an embodiment of the present invention.
[Fig. 2] A perspective diagram showing an input apparatus.
[Fig. 3] A diagram schematically showing an internal structure of the input apparatus.
[Fig. 4] A block diagram showing an electrical structure of the input apparatus.
[Fig. 5] A diagram showing an example of a screen displayed on a display apparatus.
[Fig. 6] A diagram showing a state where a user is holding the input apparatus.
[Fig. 7] Explanatory diagrams showing typical examples of ways of moving the input apparatus.
[Fig. 8] A perspective diagram showing a sensor unit.
[Fig. 9] Diagrams for illustrating a gravitational effect with respect to an acceleration sensor unit.
[Fig. 10] Diagrams for illustrating another example of the gravitational effect with respect to the acceleration sensor unit.
[Fig. 11] A flowchart showing an operation performed when calculating velocity values of the input apparatus based on angular velocity values detected by an angular velocity sensor unit.
[Fig. 12] A flowchart showing an operation of a control apparatus up to calculating displacement amounts of a pointer on a screen using the velocity values (corresponding displacement amounts) and controlling display thereof on the screen.
[Fig. 13] A top view of the user operating the input apparatus.
[Fig. 14] A diagram showing an example of a trajectory of the input apparatus seen from a plane formed by an X axis and a Y axis.
[Fig. 15] A flowchart showing an operation performed when calculating velocity values of an input apparatus based on angular velocity values detected by an angular velocity sensor unit according to another embodiment.
[Fig. 16] A flowchart showing an operation up to calculating displacement amounts of a pointer on a screen using the velocity values (corresponding displacement amounts) and controlling display thereof on the screen according to another embodiment.
[Figs. 17] Diagrams used for intuitively understanding correspondences between operations of the input apparatus in the X- and Y-axis directions and operations of the pointer displayed on the screen in respective regions.
[Figs. 18] Diagrams showing an example of correspondences between displacement amounts and corresponding displacement amounts of the pointer in an XY-direction emphasis region.
[Fig. 19] A diagram showing an example in which a PC operation image is displayed on the screen.
[Fig. 20] A perspective diagram showing an input apparatus according to another embodiment of the present invention.
[Fig. 21] A side view of the input apparatus shown in Fig. 20 seen from a rotary button side.
[Fig. 22] A diagram showing a state where the user operates the input apparatus while a lower curved surface thereof is in contact with a knee of the user.
[Fig. 23] A perspective diagram showing an input apparatus according to still another embodiment of the present invention.
[Fig. 24] A front view showing an input apparatus according to yet another embodiment of the present invention.
[Fig. 25] A side view showing the input apparatus shown in Fig. 24.
[Fig. 26] A front view of an input apparatus according to still another embodiment of the present invention.
[Figs. 27] Diagrams showing an example of operations of a pointer with respect to operations of the input apparatus in the XY-direction emphasis region.
[Fig. 28] A flowchart showing an operation of a control system according to another embodiment.
[Fig. 29] A flowchart showing an operation of a control system according to another embodiment.
[Fig. 30] A plan view showing a cellular phone according to an embodiment of the present invention.
[Fig. 31] A block diagram showing an internal structure of the cellular phone.
[Fig. 32] A diagram showing an example of a display screen that is displayed on a display section.
[Figs. 33] Diagrams for illustrating typical ways of moving the cellular phone.
[Fig. 34] A flowchart showing an operation of the cellular phone.

Description of Symbols

$V_x$ first corresponding displacement amount (first velocity value)

17

$V_y$ second corresponding displacement amount (second velocity value)
$\alpha$ first value
$\beta$ second value
X'(t) first displacement amount
Y'(t) second displacement amount
X(t), Y(t) coordinate values
1, 51, 61, 71, 81 input apparatus
10, 50, 60, 70, 80, 91, 92 casing
2 pointer
3, 120 screen
3a, 3f, 3g, 120a X-direction emphasis region
3b, 3h, 120b Y-direction emphasis region
3d, 120d XY-direction emphasis region
15 angular velocity sensor unit
16, 116 acceleration sensor unit
17 sensor unit
40 control apparatus
90 cellular phone
94 display section
100 control system
151 first angular velocity sensor
152 second angular velocity sensor
161 first acceleration sensor
162 second acceleration sensor

**Claims**

1. A control apparatus (40) adapted for controlling a movement of a pointer (2) displayed on a screen (3, 120) that includes a plurality of regions, in accordance with
   detection signals output from an input apparatus (1, 51, 61, 71, 81), the control apparatus (40) comprising:

   a reception means adapted for receiving the detection signals;
   a calculation means adapted for calculating, based on detection values of the received detection signals, a first corresponding displacement amount ($V_x$) of the input apparatus corresponding to the detection value of a movement in a first direction of a casing (10, 50, 60, 70, 80, 91, 92) of the input apparatus (1, 51, 61, 71, 81) and a second corresponding displacement amount ($V_y$) of the input apparatus corresponding to the detection value of a movement in a second direction of the casing, different from the first direction, adapted for moving the pointer (2) on the screen (3, 120); and
   a display control means adapted for controlling display of the screen (3, 120) so that the pointer (2) moves by a first displacement amount (X'(t)) obtained by multiplying the first corresponding displacement ($V_x$) amount by a first value, and the pointer (2) moves by a second displacement amount (Y'(t)) obtained by multiplying the second corresponding displacement ($V_y$) amount by a second value,

   the display control means being configured to set the first value and the second value depending on the specific region of the plurality of regions in which the pointer moves, so as to bias a moving direction of the pointer on the screen for each of the regions.

2. The control apparatus (40) according to claim 1, wherein the plurality of regions comprises a region emphasizing movements in an X axis direction and a Y axis direction, and the display control
   means is configured to set the first value based on the first corresponding displacement amount ($V_x$) and the second value based on the second corresponding displacement amount ($V_y$), when the pointer moves in the region emphasizing movements in the X axis direction and the Y axis direction.

3. The control apparatus (40) according to claim 1, wherein the first value is larger than the second value when the pointer moves in one of the plurality of regions that is elongated in an X axis direction on the screen (3, 120).

4. The control apparatus (40) according to claim 2, wherein the display control means is configured for setting the first value to be larger than the second value when the first corresponding displacement amount ($V_x$) is larger than the second corresponding displacement amount ($V_y$), and for setting the second value to be larger than the first value when the second corresponding displacement amount ($V_y$) is larger than the first corresponding displacement amount ($V_x$).

5. A control apparatus (40) adapted for controlling a movement of a pointer (2) displayed on a screen (3, 120) that includes a plurality of regions, in accordance with
information on a first corresponding displacement amount ($V_x$) of an input apparatus and information on a second corresponding displacement amount ($V_y$) of the input apparatus output from the input apparatus (1, 51, 61, 71, 81), the control apparatus (40) comprising:

a reception means adapted for receiving the information on the first corresponding displacement amount ($V_x$) and the information on the second corresponding displacement amount ($V_y$); and
a display control means adapted for controlling display of the screen (3, 120) so that the pointer (2) moves by a first displacement amount ($X'(t)$) obtained by multiplying the first corresponding displacement amount ($V_x$) by a first value, and the pointer (2) moves by a second displacement amount ($Y'(t)$) obtained by multiplying the second corresponding displacement amount ($V_y$) by a second value,

the display control means being configured for setting the first value and the second value depending on the specific region of the plurality of regions in which the pointer moves, so as to bias a moving direction of the pointer on the screen for each of the regions.

6. The control apparatus (40) according to claim 5, wherein the plurality of regions comprises a region emphasizing movements in an X axis direction and a Y axis direction, and the display control
means is configured for setting the first value based on the first corresponding displacement ($V_x$) amount and the second value based on the second corresponding displacement amount ($V_y$), when the pointer moves in the region emphasizing movements in the X axis direction and the Y axis direction.

7. The control apparatus (40) according to claim 5, wherein the first value is larger than the second value when the pointer moves in one of the plurality of regions that is elongated in an X axis direction on the screen (3, 120).

8. The control apparatus (40) according to claim 6, wherein the display control means is configured for setting the first value to be larger than the second value when the first corresponding displacement amount ($V_x$) is larger than the second corresponding displacement amount ($V_y$), and for setting the second value to be larger than the first value when the second corresponding displacement amount ($V_y$) is larger than the first corresponding displacement amount ($V_x$).

9. An input apparatus (1, 51, 61, 71, 81) adapted for outputting, to a control apparatus (40) controlling display of a movement of a pointer (2) on a screen (3, 120) a signal of displacement amount information adapted for moving the pointer (2) on the screen (3, 120), the input apparatus (1, 51, 61, 71, 81) comprising:

a casing (10, 50, 60, 70, 80, 91, 92);
a detection means adapted for detecting a movement in a first direction of the casing (10, 50, 60, 70, 80, 91, 92) and a movement in a second direction of the casing different from the first direction;

a reception means adapted for receiving regional information of a plurality of regions of the screen;
a calculation means adapted for calculating, based on detection values obtained by the detection means, a first corresponding displacement amount ($V_x$) of the input apparatus corresponding to the detection value in the first direction and a second corresponding displacement amount ($V_y$) of the input apparatus corresponding to the detection value in the second direction, adapted for moving the pointer (2) on the screen (3, 120), and calculating, based on the regional information, a first displacement amount ($X'(t)$) obtained by multiplying the first corresponding displacement amount ($V_x$) by a first value and a second displacement amount ($Y'(t)$) obtained by multiplying the second corresponding displacement amount ($V_y$) by a second value; the display control means being configured for setting the first value and the second value depending on the specific region of the plurality of regions in which the pointer moves, so as to bias a moving direction of the pointer on the screen adapted for each of the regions; and
an output means adapted for outputting the first displacement amount ($X'(t)$) and the second displacement amount ($Y'(t)$) as the signal of the displacement amount information.

**10.** The input apparatus (1, 51, 61, 71, 81) according to claim 9, wherein the calculation means is configured for setting the first value based on the first corresponding displacement amount ($V_x$) and the second value based on the second corresponding displacement amount ($V_y$), when the pointer moves in a region emphasizing movements in an X axis direction and a Y axis direction.

**11.** The input apparatus (1, 51, 61, 71, 81) according to claim 9, wherein the first value is larger than the second value when the pointer moves in one of the plurality of regions that is elongated in an X axis direction on the screen (3, 120).

**12.** The input apparatus (1, 51, 61, 71, 81) according to claim 10, wherein the calculation means is configured for setting the first value to be larger than the second value when the first corresponding displacement amount ($V_x$) is larger than the second corresponding displacement amount ($V_y$), and for setting the second value to be larger than the first value when the second corresponding displacement amount ($V_y$) is larger than the first corresponding displacement amount ($V_x$).

**13.** A control system (100), comprising:

an input apparatus (1, 51, 61, 71, 81) adapted for outputting detection signals, including

a casing (10, 50, 60, 70, 80, 91, 92),
a detection means adapted for detecting a movement in a first direction of the casing (10, 50, 60, 70, 80, 91, 92) and a movement in a second direction of the casing different from the first direction, and
an output means adapted for outputting the detection signals obtained by the detection means; and

a control apparatus (40) adapted for controlling a movement of a pointer (2) displayed on a screen (3, 120) that includes a plurality of regions in accordance with the detection signals output from the input apparatus (1, 51, 61, 71, 81), including

a reception means adapted for receiving the detection signals,
a calculation means adapted for calculating, based on detection values of the received detection signals, a first corresponding displacement amount ($V_x$) of the input apparatus corresponding to the detection value in the first direction and a second corresponding displacement amount ($V_y$) of the input apparatus corresponding to the detection value in the second direction, adapted for moving the pointer (2) on the screen (3, 120), and
a display control means adapted for controlling display of the screen (3, 120) so that the pointer (2) moves by a first displacement amount (X'(t)) obtained by multiplying the first corresponding displacement amount ($V_x$) by a first value, and the pointer (2) moves by a second displacement amount (Y'(t)) obtained by multiplying the second corresponding displacement amount ($V_y$) by a second value, the display control means being configured to set the first value and the second value depending on the specific region of the plurality of regions in which the pointer moves, so as to bias a moving direction of the pointer on the screen for each of the regions.

**14.** A control system (100), comprising:

an input apparatus (1, 51, 61, 71, 81) adapted for outputting information on corresponding displacement amounts, including

a casing (10, 50, 60, 70, 80, 91, 92),
a detection means adapted for detecting a movement in a first direction of the casing (10, 50, 60, 70, 80, 91, 92) and a movement in a second direction of the casing different from the first direction,
a calculation means adapted for calculating, based on detection values obtained by the detection means, a first corresponding displacement amount ($V_x$) of the input apparatus corresponding to the detection value in the first direction and a second corresponding displacement amount ($V_y$) of the input apparatus corresponding to the detection value in the second direction, adapted for moving a pointer (2) on a screen (3, 120), and
an output means adapted for outputting the information on the first corresponding displacement amount ($V_x$) and the information on the second corresponding displacement amount ($V_y$); and

a control apparatus (40) adapted for controlling a movement of the pointer (2) displayed on the screen (3, 120) that includes a plurality of regions in accordance with the information on the first corresponding displacement amount ($V_x$) and the information on the second corresponding displacement amount ($V_y$) output from the input apparatus (1, 51, 61, 71, 81), including

a reception means adapted for receiving the information on the first corresponding displacement amount ($V_x$) and the information on the second corresponding displacement amount ($V_y$), and
a display control means adapted for controlling display of the screen (3, 120) so that the pointer (2) moves by a first displacement amount (X'(t)) obtained by multiplying the first corresponding displacement amount ($V_x$) by a first value, and the pointer (2) moves by a second displacement amount (Y'(t)) obtained by multiplying the second corresponding displacement amount ($V_y$) by a second value, the display control means being configured for setting the first value and the second value depending on the specific region of the plurality of regions in which the pointer moves, so as to bias a moving direction of the pointer on the screen for each of the regions.

15. A method of controlling a movement of a pointer (2) displayed on a screen (3, 120) that includes a plurality of regions in accordance with a movement of an input apparatus (1, 51, 61, 71, 81 ), comprising:

detecting a movement of the input apparatus (1, 51, 61, 71, 81) in a first direction of a casing (10, 50, 60, 70, 80, 91, 92) and a movement thereof in a second direction of the casing different from the first direction;
calculating, based on detection values detected, a first corresponding displacement amount ($V_x$) of the input apparatus corresponding to the detection value in the first direction and a second corresponding displacement amount ($V_y$) of the input apparatus corresponding to the detection value in the second direction, for moving the pointer (2) on the screen (3, 120); and
controlling display of the screen (3, 120) so that the pointer (2) moves by a first displacement amount (X'(t)) obtained by multiplying the first corresponding displacement amount ($V_x$) by a first value, and the pointer (2) moves by a second displacement amount (Y'(t)) obtained by multiplying the second corresponding displacement amount ($V_y$) by a second value wherein the first value and the second value are set depending on the specific region of the plurality of regions in which the pointer moves, so as to bias a moving direction of the pointer on the screen for each of the regions.

**Patentansprüche**

1. Steuervorrichtung (40), die dazu ausgelegt ist, eine Bewegung eines Zeigers (2), der auf einem Bildschirm (3, 120), der mehrere Bereiche umfasst, angezeigt wird, in Übereinstimmung mit aus einer Eingabevorrichtung (1, 51, 61, 71, 81) ausgegebenen Detektionssignalen zu steuern, wobei die Steuervorrichtung (40) Folgendes umfasst:

Empfangsmittel, die dazu ausgelegt sind, die Detektionssignale zu empfangen;
Berechnungsmittel, die dazu ausgelegt sind, basierend auf Detektionswerten der empfangenen Detektionssignale einen ersten entsprechenden Verschiebungsbetrag ($V_x$) der Eingabevorrichtung, der dem Detektionswert einer Bewegung in einer ersten Richtung eines Gehäuses (10, 50, 60, 70, 80, 91, 92) der Eingabevorrichtung (1, 51, 61, 71, 81) entspricht, und einen zweiten entsprechenden Verschiebungsbetrag ($V_y$) der Eingabevorrichtung, der dem Detektionswert einer Bewegung in einer zweiten Richtung des Gehäuses entspricht, die sich von der ersten Richtung unterscheidet, zu berechnen, die zum Bewegen des Zeigers (2) auf dem Bildschirm (3, 120) ausgelegt sind; und
Anzeigesteuermittel, die dazu ausgelegt sind, die Anzeige des Bildschirms (3, 120) so zu steuern, dass sich der Zeiger (2) um einen ersten Verschiebungsbetrag (X'(t)), der durch Multiplizieren des ersten entsprechenden Verschiebungsbetrags ($V_x$) mit einem ersten Wert erhalten wird, bewegt und sich der Zeiger (2) um einen zweiten Verschiebungsbetrag (Y'(t)), der durch Multiplizieren des zweiten entsprechenden Verschiebungsbetrags ($V_y$) mit einem zweiten Wert erhalten wird, bewegt,

wobei die Anzeigesteuermittel dazu ausgelegt sind, den ersten Wert und den zweiten Wert in Abhängigkeit von dem spezifischen Bereich der mehreren Bereiche, in dem sich der Zeiger bewegt, so festzulegen, dass eine Bewegungsrichtung des Zeigers auf dem Bildschirm für jeden der Bereiche verzerrt wird.

2. Steuervorrichtung (40) nach Anspruch 1,
wobei die mehreren Bereiche einen Bereich umfassen, der Bewegungen in einer X-Achsenrichtung und einer Y-Achsenrichtung hervorhebt, und die Anzeigesteuermittel dazu ausgelegt sind, den ersten Wert basierend auf dem

ersten entsprechenden Verschiebungsbetrag ($V_x$) und den zweiten Wert basierend auf dem zweiten entsprechenden Verschiebungsbetrag ($V_y$) festzulegen, wenn sich der Zeiger in dem Bereich, der Bewegungen in der X-Achsenrichtung und der Y-Achsenrichtung hervorhebt, bewegt.

3. Steuervorrichtung (40) nach Anspruch 1,
wobei der erste Wert größer als der zweite Wert ist, wenn sich der Zeiger in einem der mehreren Bereiche bewegt, der in einer X-Achsenrichtung auf dem Bildschirm (3, 120) langgestreckt ist.

4. Steuervorrichtung (40) nach Anspruch 2,
wobei die Anzeigesteuermittel dazu ausgelegt sind, den ersten Wert größer als den zweiten Wert festzulegen, wenn der erste entsprechende Verschiebungsbetrag ($V_x$) größer als der zweite entsprechende Verschiebungsbetrag ($V_y$) ist, und den zweiten Wert größer als den ersten Wert festzulegen, wenn der zweite entsprechende Verschiebungsbetrag ($V_y$) größer als der erste entsprechende Verschiebungsbetrag ($V_x$) ist.

5. Steuervorrichtung (40), die dazu ausgelegt ist, eine Bewegung eines Zeigers (2), der auf einem Bildschirm (3, 120), der mehrere Bereiche umfasst, angezeigt wird, in Übereinstimmung mit Informationen über einen ersten entsprechenden Verschiebungsbetrag ($V_x$) einer Eingabevorrichtung und Informationen über einen zweiten entsprechenden Verschiebungsbetrag ($V_y$) der Eingabevorrichtung, die von der Eingabevorrichtung (1, 51, 61, 71, 81) ausgegeben werden, zu steuern, wobei die Steuervorrichtung (40) Folgendes umfasst:

Empfangsmittel, die dazu ausgelegt sind, die Informationen über den ersten entsprechenden Verschiebungsbetrag ($V_x$) und die Informationen über den zweiten entsprechenden Verschiebungsbetrag ($V_y$) zu empfangen; und
Anzeigesteuermittel, die dazu ausgelegt sind, die Anzeige des Bildschirms (3, 120) so zu steuern, dass der Zeiger (2) sich um einen ersten Verschiebungsbetrag ($X'(t)$) bewegt, der durch Multiplizieren des ersten entsprechenden Verschiebungsbetrags ($V_x$) mit einem ersten Wert erhalten wird, und sich der Zeiger (2) um einen zweiten Verschiebungsbetrag ($Y'(t)$) bewegt, der durch Multiplizieren des zweiten entsprechenden Verschiebungsbetrags ($V_y$) mit einem zweiten Wert erhalten wird,

wobei die Anzeigesteuermittel dazu ausgelegt sind, den ersten Wert und den zweiten Wert in Abhängigkeit von dem spezifischen Bereich der mehreren Bereiche, in dem sich der Zeiger bewegt, so festzulegen, dass eine Bewegungsrichtung des Zeigers auf dem Bildschirm für jeden der Bereiche verzerrt wird.

6. Steuervorrichtung (40) nach Anspruch 5,
wobei die mehreren Bereiche einen Bereich umfassen, der Bewegungen in einer X-Achsenrichtung und einer Y-Achsenrichtung hervorhebt, und die Anzeigesteuermittel dazu ausgelegt sind, den ersten Wert basierend auf dem ersten entsprechenden Verschiebungsbetrag ($V_x$) und den zweiten Wert basierend auf dem zweiten entsprechenden Verschiebungsbetrag ($V_y$) festzulegen, wenn sich der Zeiger in dem Bereich, der Bewegungen in der X-Achsenrichtung und der Y-Achsenrichtung hervorhebt, bewegt.

7. Steuervorrichtung (40) nach Anspruch 5,
wobei der erste Wert größer als der zweite Wert ist, wenn sich der Zeiger in einem der mehreren Bereiche bewegt, der in einer X-Achsenrichtung auf dem Bildschirm (3, 120) langgestreckt ist.

8. Steuervorrichtung (40) nach Anspruch 6,
wobei die Anzeigesteuermittel dazu ausgelegt sind, den ersten Wert größer als den zweiten Wert festzulegen, wenn der erste entsprechende Verschiebungsbetrag ($V_x$) größer als der zweite entsprechende Verschiebungsbetrag ($V_y$) ist, und den zweiten Wert größer als den ersten Wert festzulegen, wenn der zweite entsprechende Verschiebungsbetrag ($V_y$) größer als der erste entsprechende Verschiebungsbetrag ($V_x$) ist.

9. Eingabevorrichtung (1, 51, 61, 71, 81), die dazu ausgelegt ist, an eine Steuervorrichtung (40), die die Anzeige einer Bewegung eines Zeigers (2) auf einem Bildschirm (3, 120) steuert, ein Signal von Verschiebungsbetragsinformationen, die dazu ausgelegt sind, den Zeiger (2) auf dem Bildschirm (3, 120) zu bewegen, auszugeben, wobei die Eingabevorrichtung (1, 51, 61, 71, 81) Folgendes umfasst:

ein Gehäuse (10, 50, 60, 70, 80, 91, 92);
Detektionsmittel, die dazu ausgelegt sind, eine Bewegung in einer ersten Richtung des Gehäuses (10, 50, 60, 70, 80, 91, 92) und eine Bewegung in einer zweiten Richtung des Gehäuses, die sich von der ersten Richtung unterscheidet, zu detektieren;

Empfangsmittel, die dazu ausgelegt sind, Bereichsinformationen von mehreren Bereichen des Bildschirms zu empfangen;

Berechnungsmittel, die dazu ausgelegt sind, basierend auf Detektionswerten, die durch die Detektionsmittel erhalten werden, einen ersten entsprechenden Verschiebungsbetrag ($V_x$) der Eingabevorrichtung, der dem Detektionswert in der ersten Richtung entspricht, und einen zweiten entsprechenden Verschiebungsbetrag ($V_y$) der Eingabevorrichtung, der dem Detektionswert in der zweiten Richtung entspricht, zu berechnen, die dazu ausgelegt sind, den Zeiger (2) auf dem Bildschirm (3, 120) zu bewegen, und basierend auf den Bereichsinformationen einen ersten Verschiebungsbetrag (X'(t)), der durch Multiplizieren des ersten entsprechenden Verschiebungsbetrags ($V_x$) mit einem ersten Wert erhalten wird, und einen zweiten Verschiebungsbetrag (Y'(t)), der durch Multiplizieren des zweiten entsprechenden Verschiebungsbetrags ($V_y$) mit einem zweiten Wert erhalten wird, zu berechnen; wobei die Anzeigesteuermittel dazu ausgelegt sind, den ersten Wert und den zweiten Wert in Abhängigkeit von dem spezifischen Bereich der mehreren Bereiche, in dem sich der Zeiger bewegt, so festzulegen, dass eine Bewegungsrichtung des Zeigers auf dem Bildschirm angepasst an jeden der Bereiche verzerrt wird; und

Ausgabemittel, die dazu ausgelegt sind, den ersten Verschiebungsbetrag (X'(t)) und den zweiten Verschiebungsbetrag (Y'(t)) als Signal der Verschiebungsbetragsinformationen auszugeben.

**10.** Eingabevorrichtung (1, 51, 61, 71, 81) nach Anspruch 9,
wobei die Berechnungsmittel dazu ausgelegt sind, den ersten Wert basierend auf dem ersten entsprechenden Verschiebungsbetrag ($V_x$) und den zweiten Wert basierend auf dem zweiten entsprechenden Verschiebungsbetrag ($V_y$) festzulegen, wenn sich der Zeiger in einem Bereich, der Bewegungen in einer X-Achsenrichtung und einer Y-Achsenrichtung hervorhebt, bewegt.

**11.** Eingabevorrichtung (1, 51, 61, 71, 81) nach Anspruch 9,
wobei der erste Wert größer als der zweite Wert ist, wenn sich der Zeiger in einem der mehreren Bereiche bewegt, der in einer X-Achsenrichtung auf dem Bildschirm (3, 120) langgestreckt ist.

**12.** Eingabevorrichtung (1, 51, 61, 71, 81) nach Anspruch 10,
wobei die Berechnungsmittel dazu ausgelegt sind, den ersten Wert größer als den zweiten Wert festzulegen, wenn der erste entsprechende Verschiebungsbetrag ($V_x$) größer als der zweite entsprechende Verschiebungsbetrag ($V_y$) ist, und den zweiten Wert größer als den ersten Wert festzulegen, wenn der zweite entsprechende Verschiebungsbetrag ($V_y$) größer als der erste entsprechende Verschiebungsbetrag ($V_x$) ist.

**13.** Steuersystem (100), das Folgendes umfasst:

eine Eingabevorrichtung (1, 51, 61, 71, 81), die dazu ausgelegt ist, Detektionssignale auszugeben, wobei sie Folgendes umfasst:

ein Gehäuse (10, 50, 60, 70, 80, 91, 92),
Detektionsmittel, die dazu ausgelegt sind, eine Bewegung in einer ersten Richtung des Gehäuses (10, 50, 60, 70, 80, 91, 92) und eine Bewegung in einer zweiten Richtung des Gehäuses, die sich von der ersten Richtung unterscheidet, zu detektieren, und
Ausgabemittel, die dazu ausgelegt sind, die Detektionssignale, die durch die Detektionsmittel erhalten werden, auszugeben; und

eine Steuervorrichtung (40), die dazu ausgelegt ist, eine Bewegung eines Zeigers (2), der auf einem Bildschirm (3, 120), der mehrere Bereiche umfasst, angezeigt wird, in Übereinstimmung mit aus der Eingabevorrichtung (1, 51, 61, 71, 81) ausgegebenen Detektionssignalen zu steuern, wobei sie Folgendes umfasst:

Empfangsmittel, die dazu ausgelegt sind, die Detektionssignale zu empfangen;
Berechnungsmittel, die dazu ausgelegt sind, basierend auf Detektionswerten der empfangenen Detektionssignale einen ersten entsprechenden Verschiebungsbetrag ($V_x$) der Eingabevorrichtung, der dem Detektionswert in der ersten Richtung entspricht, und einen zweiten entsprechenden Verschiebungsbetrag ($V_y$) der Eingabevorrichtung, der dem Detektionswert in der zweiten Richtung entspricht, zu berechnen, die zum Bewegen des Zeigers (2) auf dem Bildschirm (3, 120) ausgelegt sind, und
Anzeigesteuermittel, die dazu ausgelegt sind, die Anzeige des Bildschirms (3, 120) so zu steuern, dass sich der Zeiger (2) um einen ersten Verschiebungsbetrag (X'(t)), der durch Multiplizieren des ersten ent-

sprechenden Verschiebungsbetrags ($V_x$) mit einem ersten Wert erhalten wird, bewegt und sich der Zeiger (2) um einen zweiten Verschiebungsbetrag (Y'(t)), der durch Multiplizieren des zweiten entsprechenden Verschiebungsbetrags ($V_y$) mit einem zweiten Wert erhalten wird, bewegt,

wobei die Anzeigesteuermittel dazu ausgelegt sind, den ersten Wert und den zweiten Wert in Abhängigkeit von dem spezifischen Bereich der mehreren Bereiche, in dem sich der Zeiger bewegt, so festzulegen, dass eine Bewegungsrichtung des Zeigers auf dem Bildschirm für jeden der Bereiche verzerrt wird.

**14.** Steuersystem (100), das Folgendes umfasst:

eine Eingabevorrichtung (1, 51, 61, 71, 81), die dazu ausgelegt ist, Informationen über entsprechende Verschiebungsbeträge auszugeben, wobei sie Folgendes umfasst:

ein Gehäuse (10, 50, 60, 70, 80, 91, 92);
Detektionsmittel, die dazu ausgelegt sind, eine Bewegung in einer ersten Richtung des Gehäuses (10, 50, 60, 70, 80, 91, 92) und eine Bewegung in einer zweiten Richtung des Gehäuses, die sich von der ersten Richtung unterscheidet, zu detektieren,
Berechnungsmittel, die dazu ausgelegt sind, basierend auf Detektionswerten, die durch die Detektionsmittel erhalten werden, einen ersten entsprechenden Verschiebungsbetrag ($V_x$) der Eingabevorrichtung, der dem Detektionswert in der ersten Richtung entspricht, und einen zweiten entsprechenden Verschiebungsbetrag ($V_y$) der Eingabevorrichtung, der dem Detektionswert in der zweiten Richtung entspricht, zu berechnen, die zum Bewegen eines Zeigers (2) auf dem Bildschirm (3, 120) ausgelegt sind, und
Ausgabemittel, die dazu ausgelegt sind, die Informationen über den ersten entsprechenden Verschiebungsbetrag ($V_x$) und die Informationen über den zweiten entsprechenden Verschiebungsbetrag ($V_y$) auszugeben; und

eine Steuervorrichtung (40), die dazu ausgelegt ist, eine Bewegung des Zeigers (2), der auf dem Bildschirm (3, 120), der mehrere Bereiche umfasst, angezeigt wird, in Übereinstimmung mit den Informationen über den ersten entsprechenden Verschiebungsbetrag ($V_x$) und den Informationen über den zweiten entsprechenden Verschiebungsbetrag ($V_y$), die von der Eingabevorrichtung (1, 51, 61, 71, 81) ausgegeben werden, zu steuern, wobei sie Folgendes umfasst:

Empfangsmittel, die dazu ausgelegt sind, die Informationen über den ersten entsprechenden Verschiebungsbetrag ($V_x$) und die Informationen über den zweiten entsprechenden Verschiebungsbetrag ($V_y$) zu empfangen, und
Anzeigesteuermittel, die dazu ausgelegt sind, die Anzeige des Bildschirms (3, 120) so zu steuern, dass sich der Zeiger (2) um einen ersten Verschiebungsbetrag (X'(t)), der durch Multiplizieren des ersten entsprechenden Verschiebungsbetrags ($V_x$) mit einem ersten Wert erhalten wird, bewegt und sich der Zeiger (2) um einen zweiten Verschiebungsbetrag (Y'(t)), der durch Multiplizieren des zweiten entsprechenden Verschiebungsbetrags ($V_y$) mit einem zweiten Wert erhalten wird, bewegt,

wobei die Anzeigesteuermittel dazu ausgelegt sind, den ersten Wert und den zweiten Wert in Abhängigkeit von dem spezifischen Bereich der mehreren Bereiche, in dem sich der Zeiger bewegt, so festzulegen, dass eine Bewegungsrichtung des Zeigers auf dem Bildschirm für jeden der Bereiche verzerrt wird.

**15.** Verfahren zum Steuern einer Bewegung eines Zeigers (2), der auf einem Bildschirm (3, 120) angezeigt wird, der mehrere Bereiche umfasst, in Übereinstimmung mit einer Bewegung einer Eingabevorrichtung (1, 51, 61, 71, 81), das Folgendes umfasst:

Detektieren einer Bewegung einer Eingabevorrichtung (1, 51, 61, 71, 81) in einer ersten Richtung eines Gehäuses (10, 50, 60, 70, 80, 91, 92) und einer Bewegung davon in einer zweiten Richtung des Gehäuses, die von der ersten Richtung verschieden ist;
Berechnen eines ersten entsprechenden Verschiebungsbetrags ($V_x$) der Eingabevorrichtung, der dem Detektionswert in der ersten Richtung entspricht, und eines zweiten entsprechenden Verschiebungsbetrags ($V_y$) der Eingabevorrichtung, der dem Detektionswert in der zweiten Richtung entspricht, basierend auf den detektierten Detektionswerten, um den Zeiger (2) auf dem Bildschirm (3, 120) zu bewegen; und
Steuern der Anzeige des Bildschirms (3, 120) so, dass sich der Zeiger (2) um einen ersten Verschiebungsbetrag (X'(t)), der durch Multiplizieren des ersten entsprechenden Verschiebungsbetrags ($V_x$) mit einem ersten Wert erhalten wird, bewegt und sich der Zeiger (2) um einen zweiten Verschiebungsbetrag (Y'(t)), der durch Multiplizieren des zweiten entsprechenden Verschiebungsbetrags ($V_y$) mit einem zweiten Wert erhalten wird, bewegt, wobei der erste Wert und der zweite Wert in Abhängigkeit von dem spezifischen Bereich der mehreren Bereiche, in dem sich der Zeiger bewegt, so festgelegt werden, dass eine Bewegungsrichtung des Zeigers auf dem Bildschirm für jeden der Bereiche verzerrt wird.

**Revendications**

1. Appareil de commande (40) adapté pour commander un déplacement d'un pointeur (2) affiché sur un écran (3, 120) qui comporte une pluralité de régions, en fonction de signaux de détection délivrés par un appareil d'entrée (1, 51, 61, 71, 81), l'appareil de commande (40) comprenant :

   un moyen de réception adapté pour recevoir les signaux de détection ;
   un moyen de calcul adapté pour calculer, en fonction des valeurs de détection des signaux de détection reçus, une première quantité de déplacement correspondante ($V_x$) de l'appareil d'entrée correspondant à la valeur de détection d'un déplacement dans une première direction d'un boîtier (10, 50, 60, 70, 80, 91, 92) de l'appareil d'entrée (1, 51, 61, 71, 81) et une deuxième quantité de déplacement correspondante ($V_y$) de l'appareil d'entrée correspondant à la valeur de détection d'un déplacement dans une deuxième direction du boîtier, différente de la première direction, adaptées pour déplacer le pointeur (2) sur l'écran (3, 120) ; et
   un moyen de commande d'affichage adapté pour commander l'affichage de l'écran (3, 120) de telle sorte que le pointeur (2) se déplace d'une première quantité de déplacement (X'(t)) obtenue en multipliant la première quantité de déplacement correspondante ($V_x$) par une première valeur, et le pointeur (2) se déplace d'une deuxième quantité de déplacement (Y'(t)) obtenue en multipliant la deuxième quantité de déplacement correspondante ($V_y$) par une deuxième valeur,

   le moyen de commande d'affichage étant configuré pour régler la première valeur et la deuxième valeur en fonction de la région spécifique de la pluralité de régions dans laquelle se déplace le pointeur, de manière à influencer une direction de déplacement du pointeur sur l'écran pour chacune des régions.

2. Appareil de commande (40) selon la revendication 1,
   dans lequel la pluralité de régions comprend une région accentuant les déplacements dans la direction d'un axe X et la direction d'un axe Y, et le moyen de commande d'affichage est configuré pour régler la première valeur en fonction de la première quantité de déplacement correspondante ($V_x$) et la deuxième valeur en fonction de la deuxième quantité de déplacement correspondante ($V_y$) quand le pointeur se déplace dans la région accentuant les déplacements dans la direction de l'axe X et la direction de l'axe Y.

3. Appareil de commande (40) selon la revendication 1,
   dans lequel la première valeur est plus grande que la deuxième valeur quand le pointeur se déplace dans une région de la pluralité de régions qui est allongée dans la direction d'un axe X sur l'écran (3, 120).

4. Appareil de commande (40) selon la revendication 2,
   dans lequel le moyen de commande d'affichage est configuré pour régler la première valeur pour qu'elle soit plus grande que la deuxième valeur quand la première quantité de déplacement correspondante ($V_x$) est supérieure à la deuxième quantité de déplacement correspondante ($V_y$), et pour régler la deuxième valeur pour qu'elle soit plus grande que la première valeur quand la deuxième quantité de déplacement correspondante ($V_y$) est supérieure à la première quantité de déplacement correspondante ($V_x$).

5. Appareil de commande (40) adapté pour commander un déplacement d'un pointeur (2) affiché sur un écran (3, 120) qui comporte une pluralité de régions, en fonction d'informations sur une première quantité de déplacement correspondante ($V_x$) d'un appareil d'entrée et d'informations sur une deuxième quantité de déplacement correspondante ($V_y$) de l'appareil d'entrée délivrées par l'appareil d'entrée (1, 51, 61, 71, 81), l'appareil de commande (40) comprenant :

   un moyen de réception adapté pour recevoir les informations sur la première quantité de déplacement correspondante ($V_x$) et les informations sur la deuxième quantité de déplacement correspondante ($V_y$) ; et
   un moyen de commande d'affichage adapté pour commander l'affichage de l'écran (3, 120) de telle sorte que le pointeur (2) se déplace d'une première quantité de déplacement (X'(t)) obtenue en multipliant la première quantité de déplacement correspondante ($V_x$) par une première valeur, et le pointeur (2) se déplace d'une deuxième quantité de déplacement (Y'(t)) obtenue en multipliant la deuxième quantité de déplacement correspondante ($V_y$) par une deuxième valeur,

le moyen de commande d'affichage étant configuré pour régler la première valeur et la deuxième valeur en fonction de la région spécifique de la pluralité de régions dans laquelle se déplace le pointeur, de manière à influencer une direction de déplacement du pointeur sur l'écran pour chacune des régions.

**6.** Appareil de commande (40) selon la revendication 5,
dans lequel la pluralité de régions comprend une région accentuant les déplacements dans la direction d'un axe X et la direction d'un axe Y, et le moyen de commande d'affichage est configuré pour régler la première valeur en fonction de la première quantité de déplacement correspondante ($V_x$) et la deuxième valeur en fonction de la deuxième quantité de déplacement correspondante ($V_y$) quand le pointeur se déplace dans la région accentuant les déplacements dans la direction de l'axe X et la direction de l'axe Y.

**7.** Appareil de commande (40) selon la revendication 5,
dans lequel la première valeur est plus grande que la deuxième valeur quand le pointeur se déplace dans une région de la pluralité de régions qui est allongée dans la direction d'un axe X sur l'écran (3, 120).

**8.** Appareil de commande (40) selon la revendication 6,
dans lequel le moyen de commande d'affichage est configuré pour régler la première valeur pour qu'elle soit plus grande que la deuxième valeur quand la première quantité de déplacement correspondante ($V_x$) est supérieure à la deuxième quantité de déplacement correspondante ($V_y$), et pour régler la deuxième valeur pour qu'elle soit plus grande que la première valeur quand la deuxième quantité de déplacement correspondante ($V_y$) est supérieure à la première quantité de déplacement correspondante ($V_x$).

**9.** Appareil d'entrée (1, 51, 61, 71, 81) adapté pour délivrer, à un appareil de commande (40) commandant l'affichage d'un déplacement d'un pointeur (2) sur un écran (3, 120), un signal d'informations sur des quantités de déplacement adaptées pour déplacer le pointeur (2) sur l'écran (3, 120), l'appareil d'entrée (1, 51, 61, 71, 81) comprenant :

un boîtier (10, 50, 60, 70, 80, 91, 92) ;
un moyen de détection adapté pour détecter un déplacement dans une première direction du boîtier (10, 50, 60, 70, 80, 91, 92) et un déplacement dans une deuxième direction du boîtier différente de la première direction ;
un moyen de réception adapté pour recevoir des informations régionales d'une pluralité de régions de l'écran ;
un moyen de calcul adapté pour calculer, en fonction des valeurs de détection obtenues par le moyen de détection, une première quantité de déplacement correspondante ($V_x$) de l'appareil d'entrée correspondant à la valeur de détection dans la première direction et une deuxième quantité de déplacement correspondante ($V_y$) de l'appareil d'entrée correspondant à la valeur de détection dans la deuxième direction, adaptées pour déplacer le pointeur (2) sur l'écran (3, 120), et calculer, en fonction des informations régionales, une première quantité de déplacement (X'(t)) obtenue en multipliant la première quantité de déplacement correspondante ($V_x$) par une première valeur et une deuxième quantité de déplacement (Y'(t)) obtenue en multipliant la deuxième quantité de déplacement correspondante ($V_y$) par une deuxième valeur ; le moyen de commande d'affichage étant configuré pour régler la première valeur et la deuxième valeur en fonction de la région spécifique de la pluralité de régions dans laquelle se déplace le pointeur, de manière à influencer une direction de déplacement du pointeur sur l'écran adaptée pour chacune des régions ; et
un moyen de délivrance adapté pour délivrer la première quantité de déplacement (X'(t)) et la deuxième quantité de déplacement (Y'(t)) sous la forme du signal des informations sur les quantités de déplacement.

**10.** Appareil d'entrée (1, 51, 61, 71, 81) selon la revendication 9,
dans lequel le moyen de calcul est configuré pour régler la première valeur en fonction de la première quantité de déplacement correspondante ($V_x$) et la deuxième valeur en fonction de la deuxième quantité de déplacement correspondante ($V_y$) quand le pointeur se déplace dans une région accentuant les déplacements dans la direction d'un axe X et la direction d'un axe Y.

**11.** Appareil d'entrée (1, 51, 61, 71, 81) selon la revendication 9,
dans lequel la première valeur est plus grande que la deuxième valeur quand le pointeur se déplace dans une région de la pluralité de régions qui est allongée dans la direction d'un axe X sur l'écran (3, 120).

**12.** Appareil d'entrée (1, 51, 61, 71, 81) selon la revendication 10,
dans lequel le moyen de calcul est configuré pour régler la première valeur pour qu'elle soit plus grande que la deuxième valeur quand la première quantité de déplacement correspondante ($V_x$) est supérieure à la deuxième quantité de déplacement correspondante ($V_y$), et pour régler la deuxième valeur pour qu'elle soit plus grande que la première valeur quand la deuxième quantité de déplacement correspondante ($V_y$) est supérieure à la première quantité de déplacement correspondante ($V_x$).

**13.** Système de commande (100), comprenant :

un appareil d'entrée (1, 51, 61, 71, 81) adapté pour délivrer des signaux de détection, comportant

un boîtier (10, 50, 60, 70, 80, 91, 92),
un moyen de détection adapté pour détecter un déplacement dans une première direction du boîtier (10, 50, 60, 70, 80, 91, 92) et un déplacement dans une deuxième direction du boîtier différente de la première direction, et
un moyen de délivrance adapté pour délivrer les signaux de détection obtenus par le moyen de détection ; et

un appareil de commande (40) adapté pour commander un déplacement d'un pointeur (2) affiché sur un écran (3, 120) qui comporte une pluralité de régions en fonction des signaux de détection délivrés par l'appareil d'entrée (1, 51, 61, 71, 81), comportant

un moyen de réception adapté pour recevoir les signaux de détection,
un moyen de calcul adapté pour calculer, en fonction des valeurs de détection des signaux de détection reçus, une première quantité de déplacement correspondante ($V_x$) de l'appareil d'entrée correspondant à la valeur de détection dans la première direction et une deuxième quantité de déplacement correspondante ($V_y$) de l'appareil d'entrée correspondant à la valeur de détection dans la deuxième direction, adaptées pour déplacer le pointeur (2) sur l'écran (3, 120), et

un moyen de commande d'affichage adapté pour commander l'affichage de l'écran (3, 120) de telle sorte que le pointeur (2) se déplace d'une première quantité de déplacement ($X'(t)$) obtenue en multipliant la première quantité de déplacement correspondante ($V_x$) par une première valeur, et le pointeur (2) se déplace d'une deuxième quantité de déplacement ($Y'(t)$) obtenue en multipliant la deuxième quantité de déplacement correspondante ($V_y$) par une deuxième valeur, le moyen de commande d'affichage étant configuré pour régler la première valeur et la deuxième valeur en fonction de la région spécifique de la pluralité de régions dans laquelle se déplace le pointeur, de manière à influencer une direction de déplacement du pointeur sur l'écran pour chacune des régions.

**14.** Système de commande (100), comprenant :

un appareil d'entrée (1, 51, 61, 71, 81) adapté pour délivrer des informations sur des quantités de déplacement correspondantes, comportant

un boîtier (10, 50, 60, 70, 80, 91, 92),
un moyen de détection adapté pour détecter un déplacement dans une première direction du boîtier (10, 50, 60, 70, 80, 91, 92) et un déplacement dans une deuxième direction du boîtier différente de la première direction,
un moyen de calcul adapté pour calculer, en fonction des valeurs de détection obtenues par le moyen de détection, une première quantité de déplacement correspondante ($V_x$) de l'appareil d'entrée correspondant à la valeur de détection dans la première direction et une deuxième quantité de déplacement correspondante ($V_y$) de l'appareil d'entrée correspondant à la valeur de détection dans la deuxième direction, adaptées pour déplacer un pointeur (2) sur un écran (3, 120), et
un moyen de délivrance adapté pour délivrer les informations sur la première quantité de déplacement correspondante ($V_x$) et les informations sur la deuxième quantité de déplacement correspondante ($V_y$) ; et

un appareil de commande (40) adapté pour commander un déplacement du pointeur (2) affiché sur l'écran (3, 120) qui comporte une pluralité de régions en fonction des informations sur la première quantité de déplacement correspondante ($V_x$) et des informations sur la deuxième quantité de déplacement correspondante ($V_y$) délivrées par l'appareil d'entrée (1, 51, 61, 71, 81), comportant

un moyen de réception adapté pour recevoir les informations sur la première quantité de déplacement correspondante ($V_x$) et les informations sur la deuxième quantité de déplacement correspondante ($V_y$), et un moyen de commande d'affichage adapté pour commander l'affichage de l'écran (3, 120) de telle sorte que le pointeur (2) se déplace d'une première quantité de déplacement (X'(t)) obtenue en multipliant la première quantité de déplacement correspondante ($V_x$) par une première valeur, et le pointeur (2) se déplace d'une deuxième quantité de déplacement (Y'(t)) obtenue en multipliant la deuxième quantité de déplacement correspondante ($V_y$) par une deuxième valeur, le moyen de commande d'affichage étant configuré pour régler la première valeur et la deuxième valeur en fonction de la région spécifique de la pluralité de régions dans laquelle se déplace le pointeur, de manière à influencer une direction de déplacement du pointeur sur l'écran pour chacune des régions.

**15.** Procédé de commande d'un déplacement d'un pointeur (2) affiché sur un écran (3, 120) qui comporte une pluralité de régions en fonction d'un déplacement d'un appareil d'entrée (1, 51, 61, 71, 81), comprenant les étapes suivantes :

détecter un déplacement de l'appareil d'entrée (1, 51, 61, 71, 81) dans une première direction d'un boîtier (10, 50, 60, 70, 80, 91, 92) et un déplacement de celui-ci dans une deuxième direction du boîtier différente de la première direction ;
calculer, en fonction des valeurs de détection détectées, une première quantité de déplacement correspondante ($V_x$) de l'appareil d'entrée correspondant à la valeur de détection dans la première direction et une deuxième quantité de déplacement correspondante ($V_y$) de l'appareil d'entrée correspondant à la valeur de détection dans la deuxième direction, pour déplacer le pointeur (2) sur l'écran (3, 120) ; et
commander l'affichage de l'écran (3, 120) de telle sorte que le pointeur (2) se déplace d'une première quantité de déplacement (X'(t)) obtenue en multipliant la première quantité de déplacement correspondante ($V_x$) par une première valeur, et le pointeur (2) se déplace d'une deuxième quantité de déplacement (Y'(t)) obtenue en multipliant la deuxième quantité de déplacement correspondante ($V_y$) par une deuxième valeur, la première valeur et la deuxième valeur étant réglées en fonction de la région spécifique de la pluralité de régions dans laquelle se déplace le pointeur, de manière à influencer une direction de déplacement du pointeur sur l'écran pour chacune des régions.

100

5

Receiver 39

38

Video RAM 41

ROM 37

Display control section 42

RAM 36

MPU 35

40

1

FIG.1

FIG.2

FIG.3

**FIG.4**

**FIG.5**

FIG.6

FIG.7A

FIG.7B

FIG.8

FIG.9A

FIG.9B

Reduction in
Y' component
value

Generation of
X' component
value

FIG.9C

Iy

Ix

F
Acceleration
generated in
input apparatus

17  1
15
16
G

**FIG.10A**

16  G
Reduction in
Y' component
value
1

**FIG.10B**

Y
Z
X

1
I
16
Acceleration
generated in
input apparatus
G

**FIG.10C**

Processing of input apparatus

FIG.11

Processing of control apparatus

From FIG. 11

ST120 — Is position of pointer in free region? — Yes

No

ST121 — Is position of pointer in X-direction emphasis region? — Yes

No

ST122 — Is position of pointer in Y-direction emphasis region? — Yes

No

ST124 — Set $\alpha$ and $\beta$ corresponding to respective regions

ST123 — Is position of pointer in XY-direction emphasis region? — Yes

No

ST125 — Set $\alpha$ based on velocity value Vx
Set $\beta$ based on velocity value Vy

ST126 — Calculate displacement amounts X'(t), Y'(t)
$X'(t) = \alpha\,Vx \qquad Y'(t) = \beta\,Vy$

ST127 — Generate coordinate values of pointer
$X(t) = X(t-1) + X'(t)$
$Y(t) = Y(t-1) + Y'(t)$

ST128 — Control display

FIG.12

FIG.13

FIG.14

Processing of input apparatus

**FIG.15**

Processing of input apparatus

From FIG. 15

ST219
Is position of pointer in free region? — Yes

No

ST220
Is position of pointer in X-direction emphasis region? — Yes

No

ST221
Is position of pointer in Y-direction emphasis region? — Yes

No

ST222
Is position of pointer in XY-direction emphasis region? — Yes

No

ST223
Set $\alpha$ and $\beta$ corresponding to respective regions

ST224
Set $\alpha$ based on velocity value $V_x$
Set $\beta$ based on velocity value $V_y$

ST225
Calculate displacement amounts $X'(t)$, $Y'(t)$
$X'(t) = \alpha V_x$      $Y'(t) = \beta V_y$

ST218
Input regional information

ST226
Output displacement amounts $X'(t)$, $Y'(t)$

Communication

Communication

Processing of control apparatus

ST227
Input displacement amounts $X'(t)$, $Y'(t)$

ST217
Output regional information

ST228
Calculate coordinate values of pointer
$X(t) = X(t-1) + X'(t)$
$Y(t) = Y(t-1) + Y'(t)$

ST229
Control display

FIG.16

FIG.17A

Movement direction
of input apparatus

FIG.17B          FIG.17C          FIG.17D          FIG.17E

Free region     X-direction      Y-direction      XY-direction
                emphasis region  emphasis region  emphasis region

Displacement amount X'

FIG.18A

Displacement amount Y'

FIG.18B

Displacement amount X'

FIG.18C

Displacement amount Y'

FIG.18D

FIG.19

51

11

12

13

50

50a

FIG.20

51

17

13

50

50a

FIG.21

FIG.22

FIG.23

FIG.24

FIG.25

FIG.26

FIG.27A

Movement direction of input apparatus

FIG.27B

XY-direction emphasis region

Processing of input apparatus

| Output acceleration signals (ax, ay) from acceleration sensor unit | ST301a |

| Output angular velocity signals ($\omega$x, $\omega$y) from angular velocity sensor unit | ST301b |

| Calculate correction acceleration values<br>acorx = ax − arefx<br>acory = ay − arefy | ST302a |

| Calculate angular acceleration values ($\Delta\omega$x, $\Delta\omega$y) | ST302b |

ST303 — $|\Delta\omega y| < Th1$ ?  Y → ST305  arefx ⟹ ax

N ST304  arefx ⟹ arefx

ST306 — $|\Delta\omega x| < Th1$ ?  Y → ST308  arefy ⟹ ay

N ST307  arefy ⟹ arefy

ST309 — $|\omega y| < Th2$ ?  Y → ST311  Vx ⟹ 0

N ST310  Vx ⟹ Vx

ST312 — $|\omega x| < Th2$ ?  Y → ST314  Vy ⟹ 0

N ST313  Vy ⟹ Vy

| Integrate correction acceleration values<br>Vx(t) = Vx(t-1) + acorx<br>Vy(t) = Vy(t-1) + acory | ST315 |

| Output velocity values (Vx, Vy) | ST316 |

Communication    Processing of control apparatus

| Input velocity values (Vx, Vy) | ST317 |

To FIG. 29

## FIG.28

Processing of control apparatus

From FIG. 28

ST318
Is position
of pointer in free
region? —Yes→

No

ST319
Is position
of pointer in X-direction
emphasis region? —Yes→

No

ST320
Is position
of pointer in Y-direction
emphasis region? —Yes→

No

ST322
Set $\alpha$ and $\beta$ corresponding
to respective regions

ST321
Is position
of pointer in XY-direction
emphasis region? —Yes→

No

ST323
Set $\alpha$ based on velocity value $V_x$
Set $\beta$ based on velocity value $V_y$

ST324
Calculate displacement
amounts $X'(t)$, $Y'(t)$
$X'(t) = \alpha V_x$      $Y'(t) = \beta V_y$

ST325
Generate coordinate
values of pointer
$X(t) = X(t-1) + X'(t)$
$Y(t) = Y(t-1) + Y'(t)$

ST326
Control display

FIG.29

**FIG.30**

EP 2 161 651 B1

90

112

| 119 | 94 | 110 | 111 | 113 |
|---|---|---|---|---|
| MPU | Display section | Display control section | Memory | Communication section |

| 116 | 101 | 114 | 115 | 117 |
|---|---|---|---|---|
| Acceleration sensor unit | Operation section | Speaker | Microphone | Crystal oscillator |

FIG.31

**FIG.32**

90

120

2

116

FIG.33A

2

$a_x$

FIG.33B

Y

Z

X

2

$a_y$

FIG.33C

Processing of cellular phone

```
┌─────────────────────┐
│ Output acceleration │
│ signals (ax, ay) from│── ST401
│acceleration sensor unit│
└─────────────────────┘
          │
┌─────────────────────┐
│ Calculate velocity  │
│ values (Vx, Vy) based on│── ST402
│acceleration values (ax, ay)│
└─────────────────────┘
          │
        ST403
     ╱Is position╲      Yes
    ╱ of pointer in ╲ ──────────────┐
    ╲   free region? ╱               │
      ╲           ╱                  │
        │ No                         │
        ST404                        │
     ╱Is position ╲     Yes          │
    ╱of pointer in X-direction╲──────┤
    ╲ emphasis region? ╱             │
      ╲           ╱                  │
        │ No                         │
        ST405                        │
     ╱Is position ╲     Yes          │
    ╱of pointer in Y-direction╲──────┤
    ╲ emphasis region? ╱             │
      ╲           ╱             ST407│
        │ No           ┌──────────────────────┐
        ST406          │ Set α and β corresponding│
     ╱Is position ╲    │   to respective regions │
    ╱of pointer in XY-direction╲ Yes└──────────────────────┘
    ╲ emphasis region? ╱────┐        │
      ╲           ╱         │        │
        │ No                │        │
                    ST408   │        │
        ┌──────────────────────────┐ │
        │Set α based on velocity value Vx│
        │Set β based on velocity value Vy│
        └──────────────────────────┘
                    │                │
                                ST409 │
        ┌──────────────────────────┐
        │ Calculate displacement   │
        │  amounts X'(t), Y'(t)    │
        │ X'(t) = α Vx    Y'(t) = β Vy│
        └──────────────────────────┘
                    │  ST410
        ┌──────────────────────────┐
        │ Generate coordinate      │
        │  values of pointer       │
        │ X(t) = X(t-1)+X'(t)      │
        │ Y(t) = Y(t-1)+Y'(t)      │
        └──────────────────────────┘
                    │ ST411
        ┌──────────────────────────┐
        │    Control display       │
        └──────────────────────────┘
```

# FIG.34

**EP 2 161 651 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001056743 A
- JP 3748483 B
- US 5554980 A
- US 2004176140 A1
- US 20070094617 A1